# EUROPÄISCHE PATENTSCHRIFT

(11) **EP 3 118 073 B1**
(45) Veröffentlichungstag und Bekanntmachung des Hinweises auf die Patenterteilung: **03.06.2020**
(21) Anmeldenummer: 16179321.1
(22) Anmeldetag: 13.07.2016
(51) Int. Cl.: B60T 11/16

(54) **GEBEREINHEIT**
MASTER CYLINDER UNIT
UNITÈ DE MAÎTRE CYLINDRE

(30) Priorität: 16.07.2015 DE 102015111581
(43) Veröffentlichungstag der Anmeldung: 18.01.2017
(73) Patentinhaber: Gustav Magenwirth GmbH & Co. KG, 72574 Bad Urach (DE)
(72) Erfinder: Ruckh, Stefan, 72587 Römerstein (DE)
(74) Vertreter: Hoeger, Stellrecht & Partner Patentanwälte mbB

(56) Entgegenhaltungen:
- WO-A1-2015/074654
- DE-A1- 3 002 850
- DE-A1- 10 306 058
- DE-C1- 4 206 229
- GB-A- 2 080 456
- US-A- 1 537 316
- US-A- 4 210 176
- US-A1- 2005 268 608

## Beschreibung

Die Erfindung betrifft eine Gebereinheit, insbesondere für ein hydraulisches Bremssystem oder für ein hydraulisches Kupplungssystem, umfassend einen Gehäusekörper, einen Kolben der in dem Gehäusekörper zwischen einer Ausgangsstellung und einer Druckstellung beweglich angeordnet ist, einen durch den Gehäusekörper und den Kolben begrenzten Druckraum, einen über einen Verbindungskanal mit dem Druckraum verbundenen Vorratsraum zur Bevorratung von Hydraulikmedium, eine Ventileinheit, welche in einer Öffnungsstellung die Verbindung zwischen dem Vorratsraum und dem Druckraum zulässt und in einer Schließstellung diese Verbindung trennt, sowie eine Verbindungsöffnung zur Weiterleitung von druckbeaufschlagtem Hydraulikmedium aus dem Druckraum zu einem beispielsweise angeschlossenen hydraulischen Bremszylinder, wobei in einer funktionsgemäßen Ausrichtung der Gebereinheit der Verbindungskanal in einen bezogen auf eine Schwerkraftrichtung höchstliegenden Endbereich des Druckraums einmündet.

Derartige Gebereinheiten sind aus der DE 42 06 229 und der DE 30 02 850 A1 bekannt.

Bei diesen besteht allerdings das Problem, dass Luftbläschen sich in dem Druckraum ansammeln können und nur schwerlich aus dem Druckraum entweichen.

Dies hat den Nachteil, dass durch die große Kompressibilität der Luftbläschen das unter Druck setzen des Hydraulikmediums in dem Druckraum erschwert wird, beziehungsweise gar nicht mehr möglich ist.

Der Erfindung liegt daher die Aufgabe zugrunde, eine Gebereinheit der gattungsgemäßen Art derart zu verbessern, dass ein Entweichen von Luftbläschen aus dem Druckraum in einfacher Weise ermöglicht wird.

Diese Aufgabe wird bei einer Gebereinheit der eingangs beschriebenen Art erfindungsgemäß durch die Merkmale des Anspruchs 1 gelöst.

Dabei ist unter der funktionsgemäßen Ausrichtung der Gebereinheit eine Ausrichtung der Gebereinheit zu verstehen, in welcher die bestimmungsgemäße Funktion der Gebereinheit im Wesentlichen erfüllbar ist.

Insbesondere ist denkbar, dass die funktionsgemäße Ausrichtung der Gebereinheit eine von mehreren möglichen funktionsgemäßen Ausrichtungen der Gebereinheit ist.

Der Vorteil der erfindungsgemäßen Lösung ist darin zu sehen, dass die Luftbläschen unter Einwirkung der Schwerkraft bezogen auf die Schwerkraftrichtung nach oben schweben und dadurch von alleine durch den in den bezogen auf die Schwerkraftrichtung höchstliegenden Endbereich des Druckraums mündenden Verbindungskanal aus dem Druckraum entweichen.

Dadurch wird in einfacher Weise realisiert, dass weniger bis gar keine Luftbläschen in dem Druckraum das unter Druck setzen des Hydraulikmediums in dem Druckraum behindern.

Hinsichtlich der Ausgestaltung des Gehäusekörpers wurden bislang keine näheren Angaben gemacht.

Der Gehäusekörper umschließt den Druckraum und zumindest teilweise den Verbindungskanal und der Vorratsraum ist in einem Vorratsbehälter vorgesehen.

Dabei sind verschiedene Ausführungsformen des Vorratsbehälters möglich.

Eine vorteilhafte Lösung sieht vor, dass der Gehäusekörper den Druckraum, den Vorratsraum und den Verbindungskanal umschließt.

Dies ermöglicht eine kompakte Bauweise der Gebereinheit, in welcher der Vorratsbehälter in den Gehäusekörper integriert ist.

Es ist aber auch denkbar, dass der Vorratsbehälter separat von dem Gehäusekörper ist.

Diese Lösung bietet eine Flexibilität hinsichtlich der Konstruktion und Anordnung des Vorratsbehälters und des Gehäusekörpers, da der Vorratsbehälter und der Gehäusekörper zwei separate Einheiten bilden.

Es ist denkbar, dass der Gehäusekörper aus mehreren Teilen aufgebaut ist.

Erfindungsgemäß ist der Gehäusekörper einteilig, da eine derartige Lösung konstruktiv einfach ist und keine zusätzlichen Abdichtungen zwischen den einzelnen Teilen erforderlich sind.

Es sind verschiedene Materialien denkbar, aus welchen der Gehäusekörper gebildet ist.

In einer vorteilhaften Ausführungsform ist der Gehäusekörper aus Aluminium, insbesondere in einem Gussverfahren, hergestellt.

In einer anderen, bevorzugten Ausführungsform ist der Gehäusekörper aus Kunststoff hergestellt.

Hinsichtlich der Ausgestaltung des Druckraums innerhalb des Gehäusekörpers wurden bislang keine näheren Angaben gemacht.

Eine vorteilhafte Lösung sieht vor, dass eine in dem Gehäusekörper angeordnete Zylinderkammer den Druckraum umfasst.

Besonders vorteilhaft ist es, wenn die Zylinderkammer sich längs einer Zylinderbohrungsachse erstreckt und dass die Zylinderbohrungsachse bei der funktionsgemäßen Ausrichtung der Gebereinheit im Wesentlichen parallel oder schräg zu der Schwerkraftrichtung orientiert ist, wobei unter einer relativ zur Schwerkraftrichtung im Wesentlichen parallelen oder schrägen Orientierung der Zylinderbohrungsachse eine zur Schwerkraftrichtung parallele Orientierung der Zylinderbohrungsachse oder eine Neigung der Zylinderbohrungsachse relativ zur Schwerkraftrichtung in einem Winkel von bis zu 60°, beispielsweise von bis zu 50°, insbesondere von bis zu 40°, bevorzugt von bis zu 30°, besonders vorteilhaft von bis zu 20°, zu verstehen ist.

Dadurch wird eine einfache Bauweise der Gebereinheit ermöglicht, welche zusätzlich das Aufsteigen der Luftbläschen in dem Druckraum begünstigt.

In einer weiteren, besonders vorteilhaften Ausführungsform ist vorgesehen, dass der Druckraum einen Verjüngungsabschnitt umfasst, der sich mit zunehmender Erstreckung in Richtung einer ersten Mündungsöffnung des Verbindungskanals in den Druckraum verengt.

Bei dieser Lösung werden die Luftbläschen in besonders günstiger Weise zu der ersten Mündungsöffnung des Verbindungskanals geleitet.

Besonders vorteilhaft ist es, wenn sich bei der funktionsgemäßen Ausrichtung der Gebereinheit der Verjüngungsabschnitt des Druckraums entgegengesetzt zu der Schwerkraftrichtung zunehmend verengt, wodurch das Entweichen der Luftbläschen aus dem Druckraum in einfacher Weise gefördert wird.

Ferner ist vorzugsweise vorgesehen, dass der Verjüngungsabschnitt des Druckraums sich stufenlos verengt, da eine derartige Lösung ein möglichst ungehindertes Entweichen der Luftbläschen ermöglicht.

Hinsichtlich der Ausgestaltung des Kolbens und seiner Anordnung in dem Gehäusekörper wurden bislang keine näheren Angaben gemacht.

Insbesondere ist vorgesehen, dass die Druckstellung des Kolbens mehrere Druckpositionen des Kolbens umfasst.

Damit setzt der Kolben in den verschiedenen Druckpositionen Hydraulikmedium in dem Druckraum unter Druck und in der Druckstellung verdrängt der Kolben unter Druck gesetztes Hydraulikmedium aus dem Druckraum durch eine Bewegung von einer der mehreren Druckposition in eine andere der mehreren, das Volumen des Druckraums reduzierenden Druckposition.

Besonders günstig ist es, wenn in der Zylinderkammer ein Führungsabschnitt vorgesehen ist, in welchem der Kolben beweglich geführt angeordnet ist.

Insbesondere umfasst der Kolben in einer vorteilhaften Ausführungsform eine Dichtung, mit welcher dieser den Druckraum dichtend begrenzt.

In einer anderen, bevorzugten Ausführungsform ist die Dichtung an den Gehäusekörper, insbesondere in dem Führungsabschnitt, angeordnet.

In einer besonders vorteilhaften Ausführungsform ist die Dichtung in einer quer zur Bewegungsrichtung des Kolbens liegenden Querschnittsfläche in der Zylinderkammer angeordnet, beispielsweise in einer eine Zylinderwandfläche der Zylinderkammer durchschneidenden Nut.

In einer besonders vorteilhaften Ausführungsform umfasst die Dichtung mindestens eine Dichtlippe, insbesondere mehrere Dichtlippen.

Ferner ist es günstig, wenn der Kolben in Richtung der das Volumen des Druckraums maximierenden Ausgangsstellung kraftbeaufschlagt ist.

Somit steht der Kolben in einem unbetätigten Zustand der Gebereinheit in der Ausgangsstellung.

Es sind verschiedene Ausführungsformen für die Kraftbeaufschlagung des Kolbens denkbar.

Beispielsweise ist vorgesehen, dass der Kolben durch eine Kolbendruckfeder beaufschlagt ist.

In einer anderen, vorteilhaften Ausführungsform ist der Kolben magnetisch beaufschlagt.

Eine vorteilhafte Lösung sieht vor, dass in der Zylinderkammer eine erste Schulter vorgesehen ist.

Insbesondere ist die erste Schulter zwischen dem Führungsabschnitt der Zylinderkammer und dem Verjüngungsabschnitt des Druckraums angeordnet.

Besonders günstig ist es, wenn sich die Kolbendruckfeder an der ersten Schulter der Zylinderkammer abstützt.

Hinsichtlich der Anordnung der Ventileinheit wurden bislang keine näheren Angaben gemacht.

Bei einer vorteilhaften Ausführungsform ist vorgesehen, dass die Ventileinheit einen Ventilsitz umfasst.

Beispielsweise ist der Ventilsitz in dem bei der funktionsgemäßen Ausrichtung der Gebereinheit bezogen auf die Schwerkraftrichtung höchstliegenden Endbereich des Druckraums vorgesehen.

Damit ist in konstruktiv einfacher Weise sowohl ein sicheres Abtrennen des Druckraums von dem Vorratsraum durch die Ventileinheit in der Schließstellung als auch eine optimale Abfuhr der Luftbläschen bei in der Öffnungsstellung stehender Ventileinheit ermöglicht.

Es sind aber auch andere Positionierungen des Ventilsitzes denkbar.

Beispielsweise ist der Ventilsitz an einem dem Verbindungskanal zugewandten Ende der Zylinderkammer angeordnet.

In einer weiteren, vorteilhaften Ausführungsform ist vorgesehen, dass der Ventilsitz in dem Verjüngungsabschnitt des Druckraums vorgesehen ist.

Hinsichtlich der Ausgestaltung der Ventileinheit wurden bislang keine näheren Angaben gemacht.

Eine vorteilhafte Lösung sieht vor, dass die Ventileinheit einen in dem Druckraum angeordneten Ventilkörper umfasst, der mit dem Ventilsitz zusammenwirkt und dadurch in einfacher Bauweise ein Öffnen und Schließen der Ventileinheit ermöglicht wird.

Ferner ist es günstig, wenn der Ventilkörper in Richtung des Ventilsitzes kraftbeaufschlagt ist.

Für die Kraftbeaufschlagung des Ventilkörpers sind verschiedene Ausführungsformen denkbar.

Beispielsweise ist der Ventilkörper magnetisch beaufschlagt, insbesondere umfasst der Ventilkörper einen ersten Magneten und der Kolben einen zweiten Magneten, wobei ein dem zweiten Magneten zugewandter Magnetpol des ersten Magneten und ein dem ersten Magneten zugewandter Magnetpol des zweiten Magneten gleichartig sind.

In einer anderen, besonders vorteilhaften Ausführungsform, ist der Ventilkörper durch eine Druckfeder beaufschlagt.

Eine besonders vorteilhafte Lösung sieht vor, dass die Druckfeder sich an dem Kolben abstützt.

Erfindungsgemäß ist vorgesehen, dass der Kolben und die Ventileinheit durch eine Kopplungseinheit gekoppelt sind.

Erfindungsgemäß ist vorgesehen, dass der Kolben und die Ventileinheit durch eine kolbenstellungsabhängig wirksame Kopplungseinheit gekoppelt sind.

In einer besonders bevorzugten Ausführungsform ist vorgesehen, dass die Kopplungseinheit in der Ausgangsstellung des Kolbens wirksam ist und in der Druckstellung des Kolbens unwirksam ist. Dabei ist unter einer wirksamen Kopplungseinheit insbesondere zu verstehen, dass die wirksame Kopplungseinheit bei einer Bewegung des Kolbens, beispielsweise relativ zu dem Gehäusekörper, die Ventileinheit zwangsläufig mitbewegt, beispielsweise die wirksame Kopplungseinheit die Positionen des Kolbens und zumindest eines Elementes der Ventileinheit, beispielsweise des Ventilkörpers, relativ zueinander fixiert und wobei insbesondere unter einer unwirksamen Kopplungseinheit zu verstehen ist, dass die unwirksame Kopplungseinheit eine Relativbewegung des Kolbens relativ zur Ventileinheit zulässt.

Erfindungsgemäß ist vorgesehen, dass die Kopplungseinheit den Kolben und die Ventileinheit so koppelt, dass die Kopplungseinheit die Ventileinheit in der Öffnungsstellung hält, wenn der Kolben in der Ausgangsstellung steht und in der Druckstellung des Kolbens die Kopplungseinheit die Ventileinheit und den Kolben entkoppelt.

Insbesondere ermöglicht die Kopplungseinheit in der Druckstellung des Kolbens eine Relativbewegung des Kolbens von einer der mehreren Druckpositionen in eine andere der mehreren Druckpositionen relativ zu der in der Schließstellung stehenden Ventileinheit, insbesondere relativ zu dem Ventilkörper.

Dadurch wird erreicht, dass einerseits stets dann, wenn der Kolben in der Ausgangsstellung steht, die Ventileinheit zwangsgesteuert öffnet und Hydraulikmedium aus dem Vorratsraum in den Druckraum eintreten kann und Luftbläschen aus dem Druckraum entweichen und andererseits in einem ungekoppelten Zustand der Kolben durch eine Bewegung in eine das Volumen des Druckraums verkleinernde Richtung unter Druck gesetztes Hydraulikmedium aus dem Druckraum verdrängen kann und gleichzeitig zu dieser Bewegung des Kolbens die Ventileinheit in der Schließstellung verharrt.

Beispielsweise greift die Kopplungseinheit in der Ausgangsstellung des Kolbens über eine Zugwirkung an den Ventilkörper an, so dass die Ventileinheit in die Öffnungsstellung gezogen wird, wenn der Kolben in der Ausgangsstellung steht, während die Kopplungseinheit in der Druckstellung des Kolbens, insbesondere in allen Druckpositionen des Kolbens, unwirksam ist, insbesondere die Kopplungseinheit in der Druckstellung des Kolbens eine Relativbewegung des Kolbens relativ zu der Ventileinheit ermöglicht.

Insbesondere hält die Kopplungseinheit die Ventileinheit entgegen der Kraft der Druckfeder in der Öffnungsstellung, so lange der Kolben in der Ausgangsstellung steht.

Ferner ist denkbar, dass der Ventilsitz einen Anschlag für die Ventileinheit bildet, der insbesondere die Kopplung zwischen dem Kolben und der Ventileinheit durch die Kopplungseinheit löst, wenn die Ventileinheit, beispielsweise durch eine Bewegung des Kolbens aus der Ausgangsstellung heraus veranlasst, in der Schließstellung positioniert ist.

Eine besonders günstige Ausführungsform sieht vor, dass die Kopplungseinheit ein Kopplungselement und ein auf das Kopplungselement in der Ausgangsstellung des Kolbens einwirkendes kolbenseitiges Element umfasst.

Insbesondere ist das Kopplungselement der Kopplungseinheit in der Druckstellung des Kolbens, insbesondere in allen Druckpositionen des Kolbens, relativ zu dem kolbenseitigen Element frei bewegbar.

Insbesondere umfasst das kolbenseitige Element einen Anschlag für das Kopplungselement, wobei eine Anschlagsfläche des Kopplungselements an dem Anschlag des kolbenseitigen Elements in der Ausgangsstellung des Kolbens anliegt und in der Druckstellung des Kolbens sich die Anschlagsfläche des Kopplungselements bei einer das Volumen des Druckraums reduzierenden Bewegung des Kolbens, insbesondere bei einer Bewegung des Kolbens von einer der mehreren Druckpositionen in eine andere, das Volumen des Druckraums verkleinernde der mehreren Druckpositionen, von dem Anschlag weg bewegt.

Insbesondere umfasst das kolbenseitige Element einen Ringbund, welcher das Kopplungselement hält.

Beispielsweise umfasst das kolbenseitige Element eine Führungshülse und eine Stützhülse, wobei bevorzugt das, insbesondere als Stift mit einem endseitig angeordneten Kopf ausgebildete, Kopplungselement in der Führungshülse frei beweglich angeordnet ist und insbesondere der Ringbund das Kopplungselement in der Führungshülse hält.

In einer anderen, vorteilhaften Ausführungsform ist das Kopplungselement als eine Schnappvorrichtung ausgebildet, die beispielsweise in die Führungshülse des kolbenseitigen Elements eingreift und von dem Ringbund gehalten wird.

Damit wird in einer einfachen Bauweise eine derartige Kopplungseinheit realisiert.

Insbesondere ist vorgesehen, dass der Ventilkörper der Ventileinheit und das Kopplungselement der Kopplungseinheit einstückig ausgebildet sind.

Dies ermöglicht eine sowohl einfache als auch stabile Ausführungsform.

Hinsichtlich der Anordnung der Verbindungsöffnung wurden bislang keine näheren Angaben gemacht.

Vorzugsweise ist die Verbindungsöffnung in einem Zwischenbereich des Druckraums angeordnet, welcher von dem bei der funktionsgemäßen Ausrichtung der Gebereinheit bezogen auf die Schwerkraftrichtung höchstliegenden Endbereich des Druckraums beabstandet ist.

Insbesondere ist vorgesehen, dass zwischen dem Zwischenbereich des Druckraums und dem bei der funktionsgemäßen Ausrichtung der Gebereinheit bezogen auf die Schwerkraftrichtung höchstliegenden Endbereich des Druckraums ein Teilabschnitt des Druckraums angeordnet ist.

Damit wird in vorteilhafter Weise erreicht, dass Luftbläschen, die unter Einwirkung der Schwerkraft bezogen auf die Schwerkraftrichtung nach oben an den höchstliegenden Endbereich schweben, nicht in die Verbindungsöffnung gelangen und somit bei einer Druckbeaufschlagung des Hydraulikmediums in dem Druckraum das weitergeleitete druckbeaufschlagte Hydraulikmedium weitgehend luftbläschenfrei ist.

Insbesondere liegt der Zwischenbereich bei einer funktionsgemäßen Ausrichtung der Gebereinheit bezogen auf die Schwerkraftrichtung unterhalb des höchstliegenden Endbereichs.

Besonders günstig ist es, wenn ein Teilabschnitt des Druckraums, beispielsweise ein Endabschnitt des Druckraums, zwischen der Mündungsöffnung und der Verbindungsöffnung angeordnet ist.

Beispielsweise ist der Verjüngungsabschnitt zwischen der Mündungsöffnung und der Verbindungsöffnung angeordnet.

Insbesondere ist vorgesehen, dass bei einer funktionsgemäßen Ausrichtung der Gebereinheit bezogen auf die Schwerkraftrichtung der Verjüngungsabschnitt oberhalb der Verbindungsöffnung angeordnet ist.

Beispielsweise ist ein Teilabschnitt, insbesondere der Endabschnitt, des Druckraums zwischen dem Ventilsitz und dem Zwischenbereich angeordnet.

Es ist vorteilhaft, wenn der Ventilsitz bei einer funktionsgemäßen Ausrichtung der Gebereinheit bezogen auf die Schwerkraftrichtung oberhalb des Zwischenbereichs angeordnet ist.

Beispielsweise ist zwischen dem Ventilsitz und dem Zwischenbereich die erste Schulter angeordnet.

Bei einer besonders bevorzugten Ausführungsform ist vorgesehen, dass der Zwischenbereich in einem Führungsendbereich des Führungsabschnittes angeordnet ist.

Hinsichtlich der Ausgestaltung des Verbindungskanals wurden bislang keine näheren Angaben gemacht.

Grundsätzlich wäre es ausreichend, wenn der Verbindungskanal in der funktionsgemäßen Ausrichtung der Gebereinheit bezogen auf die Schwerkraftrichtung nicht abfallend zum Vorratsraum verläuft.

In einer vorteilhaften Ausführungsform ist vorgesehen, dass der Verbindungskanal in der funktionsgemäßen Ausrichtung der Gebereinheit aufsteigend von der ersten Mündungsöffnung des Verbindungskanals in den Druckraum zu einer, insbesondere höherliegenden, zweiten Mündungsöffnung des Verbindungskanals in den Vorratsraum verläuft.

Dadurch wird ein Entweichen der Luftbläschen in den Vorratsraum unterstützt, so dass auch der Verbindungskanal zumindest weitgehend luftbläschenfrei ist.

Hinsichtlich der Ausgestaltung des Vorratsraums wurden bislang keine näheren Angaben gemacht.

Bei einer bevorzugten Ausführungsform ist bei der funktionsgemäßen Ausrichtung der Gebereinheit bezogen auf die Schwerkraftrichtung unterhalb des Vorratsraums ein Sammelbereich vorgesehen.

Dies ermöglicht ein Ansammeln von in dem in dem Vorratsraum bevorrateten Hydraulikmedium schwebenden Schmutzpartikeln in dem Sammelbereich, so dass in dem in dem Vorratsraum bevorrateten Hydraulikmedium weniger, insbesondere keine Verunreinigungen schweben.

Ferner ist vorteilhafterweise vorgesehen, dass der Verbindungskanal in der funktionsgemäßen Ausrichtung der Gebereinheit bezogen auf die Schwerkraftrichtung oberhalb des Sammelbereichs in den Vorratsraum einmündet.

Damit verbleiben die in dem Sammelbereich angesammelten Schmutzpartikel in dem Sammelbereich und in dem Vorratsraum bevorratetes Hydraulikmedium, in welchem weniger Schmutzpartikel schweben, fließt aus dem Vorratsraum in den Verbindungskanal ab, so dass weniger Schmutzpartikel in den Druckraum gelangen.

Alternativ oder ergänzend betrifft die Erfindung eine Lenkerarmatur für ein lenkergesteuertes Fahrzeug, umfassend ein Armaturengehäuse, wobei in die Lenkerarmatur eine Gebereinheit integriert ist, welche erfindungsgemäß nach einem oder mehreren der voranstehenden Merkmale ausgebildet ist.

Insbesondere bildet das Armaturengehäuse den Gehäusekörper der Gebereinheit.

Vorzugsweise ist vorgesehen, dass die Lenkerarmatur sich von einem Befestigungsbereich in eine Erstreckungsrichtung zu einer Betätigungsseite erstreckt und dass bei einer funktionsgemäßen Ausrichtung der in die Lenkerarmatur integrierten Gebereinheit die Erstreckungsrichtung schräg zu der Schwerkraftrichtung verläuft, insbesondere die Erstreckungsrichtung mit der Schwerkraftrichtung einen Winkel einschließt, welcher kleiner ist als 60°, bevorzugt kleiner ist als 50°, insbesondere kleiner ist als 40°, beispielsweise kleiner ist als 30°, insbesondere kleiner ist als 20°.

Beispielsweise ist in dem Befestigungsbereich eine Befestigungsvorrichtung angeordnet zum Befestigen der Lenkerarmatur an einen Lenker des lenkergesteuerten Fahrzeuges.

Insbesondere ist vorgesehen, dass die Lenkerarmatur eine Betätigungsvorrichtung, beispielweise umfassend einen Hebel, aufweist, wobei bei einem Betätigen der Betätigungsvorrichtung der Kolben der Gebereinheit von der Betätigungsvorrichtung beaufschlagt wird.

Vorzugsweise ist die Betätigungsvorrichtung an der Betätigungsseite der Lenkerarmatur angeordnet.

Bei einer besonders bevorzugten Ausführungsform ist an der Betätigungsseite der Lenkerarmatur eine Betätigungsöffnung vorgesehen, von welcher ausgehend sich die Zylinderkammer der in die Lenkerarmatur integrierten Gebereinheit in das Armaturengehäuse hinein erstreckt.

Alternativ oder ergänzend betrifft die Erfindung ein Fahrzeug umfassend einen Rahmen und mindestens zwei an dem Rahmen drehbar gelagerte Räder, wobei an dem in Fahrbereitschaft stehenden Fahrzeug eine Gebereinheit, welche erfindungsgemäß nach einem oder mehreren der voranstehenden Merkmale ausgebildet ist, in der funktionsgemäßen Ausrichtung angeordnet ist, so dass die voranstehend genannten Vorteile der erfindungsgemäßen Gebereinheit sich auf das Fahrzeug mit angeordneter Gebereinheit übertragen.

Besonders vorteilhaft ist es, wenn die funktionsgemäße Ausrichtung der an das in Fahrbereitschaft auf einer horizontalen Standfläche stehende Fahrzeug angeordneten Gebereinheit im Wesentlichen parallel oder schräg zu der Senkrechten auf der horizontalen Standfläche orientiert ist, wobei unter einer zur Senkrechten auf der horizontalen Standfläche im Wesentlichen parallelen oder schrägen Orientierung der Gebereinheit eine zur Senkrechten auf der horizontalen Standfläche parallele Orientierung der Gebereinheit oder eine Orientierung der Gebereinheit in einem Winkel von bis zu 60°, beispielsweise von bis zu 50°, insbesondere von bis zu 40°, bevorzugt von bis zu 30°, besonders vorteilhaft von bis zu 20°, relativ zur Senkrechten auf der horizontalen Standfläche zu verstehen ist, so dass die voranstehenden Vorteile ihre Wirkung in besonders günstiger Weise entfalten können.

In einer anderen, besonders vorteilhaften Ausführungsform ist vorgesehen, dass die funktionsgemäße Ausrichtung der an das in Fahrbereitschaft auf einer horizontalen Standfläche stehende Fahrzeug angeordneten Gebereinheit im Wesentlichen parallel oder schräg zu der Schwerkraftrichtung und in die entgegengesetzte Richtung als die Schwerkraftrichtung orientiert ist, wobei unter einer relativ zur Schwerkraftrichtung im Wesentlichen parallelen oder schrägen und in die entgegengesetzte Richtung orientierten Ausrichtung der Gebereinheit eine Ausrichtung der Gebereinheit die mit der Schwerkraftrichtung einen Winkel von mindestens 120°, beispielsweise von mindestens 130°, insbesondere von mindestens 140°, bevorzugt von mindestens 150°, besonders vorteilhaft von mindestens 160° einschließt, zu verstehen ist.

In einer weiteren bevorzugten Ausführungsform ist vorgesehen, dass die funktionsgemäße Ausrichtung der an das in Fahrbereitschaft auf einer horizontalen Standfläche stehende Fahrzeug angeordneten Gebereinheit im Wesentlichen parallel oder schräg zu einer Längsmittelebene des Fahrzeugs liegt und im Wesentlichen senkrecht oder schräg zu einer durch die Mittelpunkte der mindestens zwei Räder definierten, geometrischen Verbindungslinie steht, wobei unter einer im Wesentlichen parallel oder schräg zur Längsmittelebene liegenden Ausrichtung der Gebereinheit eine Ausrichtung der Gebereinheit die mit der Längsmittelebene einen Winkel von bis zu 60°, beispielsweise von bis zu 50°, insbesondere von bis zu 40°, bevorzugt von bis zu 30°, besonders vorteilhaft von bis zu 20°, einschließt zu verstehen ist und wobei unter einer im Wesentlichen senkrecht oder schräg zur Verbindungslinie stehenden Ausrichtung der Gebereinheit eine Ausrichtung der Gebereinheit die mit der Verbindungslinie einen Winkel von mindestens 30°, beispielsweise von mindestens 40°, insbesondere von mindestens 50°, bevorzugt von mindestens 60°, besonders vorteilhaft von mindestens 70° einschließt und einen Winkel von höchstens 150°, beispielsweise von höchstens 140°, insbesondere von höchstens 130°, bevorzugt von höchstens 120°, besonders bevorzugt von höchstens 110° einschließt zu verstehen ist.

Insbesondere ist vorgesehen, dass ein Rad der mindestens zwei Räder nicht lenkbar gelagert ist und in einer Ebene parallel zur Längsmittelebene des Fahrzeugs drehbar gelagert ist.

Hinsichtlich der Art des Fahrzeugs wurden bislang keine Angaben gemacht.

Beispielsweise ist das Fahrzeug, an welches eine erfindungsgemäß nach einem oder mehreren der voranstehenden Merkmale ausgebildete Gebereinheit angeordnet ist, ein motorisiertes Fahrzeug.

Insbesondere ist das Fahrzeug, an welches eine erfindungsgemäß nach einem oder mehreren der voranstehenden Merkmale ausgebildete Gebereinheit angeordnet ist, ein lenkergeführtes Fahrzeug.

In einer besonders vorteilhaften Ausführungsform ist das Fahrzeug, an welches eine erfindungsgemäß nach einem oder mehreren der voranstehenden Merkmale ausgebildete Gebereinheit angeordnet ist, ein Zweirad.

Ferner ist denkbar, dass das Fahrzeug, an welches eine erfindungsgemäß nach einem oder mehreren der voranstehenden Merkmale ausgebildete Gebereinheit angeordnet ist, eine Kombination der voranstehenden Merkmale aufweist.

Bei einer besonders vorteilhaften Ausführungsform ist vorgesehen, dass die an das Fahrzeug angeordnete Gebereinheit in eine Lenkerarmatur integriert ist, insbesondere dass die an das Fahrzeug angeordnete Gebereinheit in eine Lenkerarmatur mit einem oder mehreren der voranstehenden Merkmale integriert ist.

Beispielsweise ist vorgesehen, dass ein Gehäusekörper der an das Fahrzeug angeordneten Gebereinheit von einem Armaturengehäuse der Lenkerarmatur ausgebildet wird.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Gebereinheit (24), insbesondere für ein hydraulisches Bremssystem (20) oder für ein hydraulisches Kupplungssystem, umfassend einen Gehäusekörper (42), einen Kolben (90) der in dem Gehäusekörper (42) zwischen einer Ausgangsstellung (116) und einer Druckstellung (103) beweglich angeordnet ist, einen durch den Gehäusekörper (42) und den Kolben (90) begrenzten Druckraum (102), einen über einen Verbindungskanal (86) mit dem Druckraum (48) verbundenen Vorratsraum (82) zur Bevorratung von Hydraulikmedium, eine Ventileinheit (130), welche in einer Öffnungsstellung (150) die Verbindung zwischen dem Vorratsraum (82) und dem Druckraum (102) zulässt und in einer Schließstellung (135) diese Verbindung trennt, sowie eine Verbindungsöffnung (104) zur Weiterleitung von druckbeaufschlagtem Hydraulikmedium aus dem Druckraum (102) zu einem beispielsweise angeschlossenen hydraulischen Bremszylinder (32), dadurch gekennzeichnet, dass in einer funktionsgemäßen Ausrichtung (262) der Gebereinheit (24) der Verbindungskanal (86) in einen bezogen auf eine Schwerkraftrichtung (266) höchstliegenden Endbereich (284) des Druckraums (102) einmündet.
2. Gebereinheit (24) nach Ausführungsform 1, dadurch gekennzeichnet, dass der Gehäusekörper (42) den Druckraum (102), den Vorratsraum (82) und den Verbindungskanal (86) umschließt.
3. Gebereinheit (24) nach einer der voranstehenden Ausführungsformen, dadurch gekennzeichnet, dass der Gehäusekörper (42) einteilig ist.
4. Gebereinheit (24) nach einer der voranstehenden Ausführungsformen, dadurch gekennzeichnet, dass der Gehäusekörper (42) aus Kunststoff hergestellt ist.
5. Gebereinheit (24) nach einer der voranstehenden Ausführungsformen, dadurch gekennzeichnet, dass eine in dem Gehäusekörper (42) angeordnete Zylinderkammer (50) den Druckraum (102) umfasst.
6. Gebereinheit (24) nach einer der voranstehenden Ausführungsformen, dadurch gekennzeichnet, dass die Zylinderkammer (50) sich längs einer Zylinderbohrungsachse (56) erstreckt und dass die Zylinderbohrungsachse (56) bei der funktionsgemäßen Ausrichtung (262) der Gebereinheit (24) im Wesentlichen parallel oder schräg zu der Schwerkraftrichtung (266) orientiert ist.
7. Gebereinheit (24) nach einer der voranstehenden Ausführungsformen, dadurch gekennzeichnet, dass der Druckraum (102) einen Verjüngungsabschnitt (76) umfasst, der sich mit zunehmender Erstreckung in Richtung einer ersten Mündungsöffnung (78) des Verbindungskanals (86) in den Druckraum (102) verengt.
8. Gebereinheit (24) nach einer der voranstehenden Ausführungsformen, dadurch gekennzeichnet, dass sich bei der funktionsgemäßen Ausrichtung (262) der Gebereinheit (24) der Verjüngungsabschnitt (76) des Druckraums (102) entgegengesetzt zu der Schwerkraftrichtung (266) zunehmend verengt.
9. Gebereinheit (24) nach einer der voranstehenden Ausführungsformen, dadurch gekennzeichnet, dass der Verjüngungsabschnitt (76) des Druckraums (102) sich stufenlos verengt.
10. Gebereinheit (24) nach einer der voranstehenden Ausführungsformen, dadurch gekennzeichnet, dass die Druckstellung (103) des Kolbens (90) mehrere Druckpositionen des Kolbens (90) umfasst.
11. Gebereinheit (24) nach einer der voranstehenden Ausführungsformen, dadurch gekennzeichnet, dass in der Zylinderkammer (50) ein Führungsabschnitt (58) vorgesehen ist, in welchem der Kolben (90) beweglich geführt angeordnet ist.
12. Gebereinheit (24) nach einer der voranstehenden Ausführungsformen, dadurch gekennzeichnet, dass der Kolben (90) in Richtung der das Volumen des Druckraums (102) maximierenden Ausgangsstellung (116) kraftbeaufschlagt ist.
13. Gebereinheit (24) nach einer der voranstehenden Ausführungsformen, dadurch gekennzeichnet, dass der Kolben (90) durch eine Kolbendruckfeder (162) beaufschlagt ist.
14. Gebereinheit (24) nach einer der voranstehenden Ausführungsformen, dadurch gekennzeichnet, dass in der Zylinderkammer (50) eine erste Schulter (68) vorgesehen ist.
15. Gebereinheit (24) nach einer der voranstehenden Ausführungsformen, dadurch gekennzeichnet, dass die erste Schulter (68) zwischen dem Führungsabschnitt (58) der Zylinderkammer (50) und dem Verjüngungsabschnitt (76) des Druckraums (102) angeordnet ist.
16. Gebereinheit (24) nach einer der voranstehenden Ausführungsformen, dadurch gekennzeichnet, dass sich die Kolbendruckfeder (162) an der ersten Schulter (68) der Zylinderkammer (50) abstützt.
17. Gebereinheit (24) nach einer der voranstehenden Ausführungsformen, dadurch gekennzeichnet, dass die Ventileinheit (130) einen Ventilsitz (51) umfasst.
18. Gebereinheit (24) nach einer der voranstehenden Ausführungsformen, dadurch gekennzeichnet, dass der Ventilsitz (51) in dem bei der funktionsgemäßen Ausrichtung (262) der Gebereinheit (24) bezogen auf die Schwerkraftrichtung (266) höchstliegenden Endbereich (284) des Druckraums (102) vorgesehen ist.
19. Gebereinheit (24) nach einer der voranstehenden Ausführungsformen, dadurch gekennzeichnet, dass der Ventilsitz (51) in dem Verjüngungsabschnitt (76) des Druckraums (102) vorgesehen ist.
20. Gebereinheit (24) nach einer der voranstehenden Ausführungsformen, dadurch gekennzeichnet, dass die Ventileinheit (130) einen in dem Druckraum (102) angeordneten Ventilkörper (132) umfasst, der mit dem Ventilsitz (51) zusammenwirkt.
21. Gebereinheit (24) nach einer der voranstehenden Ausführungsformen, dadurch gekennzeichnet, dass der Ventilkörper (132) in Richtung des Ventilsitzes (51) kraftbeaufschlagt ist.
22. Gebereinheit (24) nach einer der voranstehenden Ausführungsformen, dadurch gekennzeichnet, dass der Ventilkörper (132) durch eine Druckfeder (142) beaufschlagt ist.
23. Gebereinheit (24) nach einer der voranstehenden Ausführungsformen, dadurch gekennzeichnet, dass die Druckfeder (142) sich an dem Kolben (90) abstützt.
24. Gebereinheit (24) nach einer der voranstehenden Ausführungsformen, dadurch gekennzeichnet, dass der Kolben (90) und die Ventileinheit (130) durch eine Kopplungseinheit (147) gekoppelt sind.
25. Gebereinheit (24) nach einer der voranstehenden Ausführungsformen, dadurch gekennzeichnet, dass der Kolben (90) und die Ventileinheit (130) durch eine kolbenstellungsabhängig wirksame Kopplungseinheit (147) gekoppelt sind.
26. Gebereinheit (24) nach einer der voranstehenden Ausführungsformen, dadurch gekennzeichnet, dass die Kopplungseinheit (147) in der Ausgangsstellung (116) des Kolbens (90) wirksam ist und in der Druckstellung (103) des Kolbens (90) unwirksam ist.
27. Gebereinheit (24) nach einer der voranstehenden Ausführungsformen, dadurch gekennzeichnet, dass die Kopplungseinheit (147) den Kolben (90) und die Ventileinheit (130) so koppelt, dass die Kopplungseinheit (147) die Ventileinheit (130) in der Öffnungsstellung (150) hält, wenn der Kolben (90) in der Ausgangsstellung (116) steht und in der Druckstellung (103) des Kolbens (90) die Kopplungseinheit (147) die Ventileinheit (130) und den Kolben (90) entkoppelt.
28. Gebereinheit (24) nach einer der voranstehenden Ausführungsformen, dadurch gekennzeichnet, dass die Kopplungseinheit (147) ein Kopplungselement (148) und ein auf das Kopplungselement (148) in der Ausgangsstellung (116) des Kolbens (90) einwirkendes kolbenseitiges Element (144, 146) umfasst.
29. Gebereinheit (24) nach einer der voranstehenden Ausführungsformen, dadurch gekennzeichnet, dass der Ventilkörper (132) der Ventileinheit (130) und das Kopplungselement (148) der Kopplungseinheit (147) einstückig ausgebildet sind.
30. Gebereinheit (24) nach einer der voranstehenden Ausführungsformen, dadurch gekennzeichnet, dass die Verbindungsöffnung (104) in einem Zwischenbereich (63) des Druckraums (102) angeordnet ist, welcher von dem bei der funktionsgemäßen Ausrichtung (262) der Gebereinheit (24) bezogen auf die Schwerkraftrichtung (266) höchstliegenden Endbereich (284) des Druckraums (102) beabstandet ist.
31. Gebereinheit (24) nach einer der voranstehenden Ausführungsformen, dadurch gekennzeichnet, dass ein Teilabschnitt des Druckraums (102) zwischen der ersten Mündungsöffnung (78) des Verbindungskanals (86) in dem Druckraum (102) und der Verbindungsöffnung (104) angeordnet ist.
32. Gebereinheit (24) nach einer der voranstehenden Ausführungsformen, dadurch gekennzeichnet, dass der Verbindungskanal (86) in der funktionsgemäßen Ausrichtung (262) der Gebereinheit (24) aufsteigend von der ersten Mündungsöffnung (78) des Verbindungskanals (86) in den Druckraum (102) zu einer zweiten Mündungsöffnung (84) des Verbindungskanals (86) in den Vorratsraum (82) verläuft.
33. Gebereinheit (24) nach einer der voranstehenden Ausführungsformen, dadurch gekennzeichnet, dass bei der funktionsgemäßen Ausrichtung (262) der Gebereinheit (24) bezogen auf die Schwerkraftrichtung (266) unterhalb des Vorratsraums (82) ein Sammelbereich (226) vorgesehen ist.
34. Gebereinheit (24) nach einer der voranstehenden Ausführungsformen, dadurch gekennzeichnet, dass der Verbindungskanal (86) in der funktionsgemäßen Ausrichtung (262) der Gebereinheit (24) bezogen auf die Schwerkraftrichtung (266) oberhalb des Sammelbereichs (226) in den Vorratsraum (82) einmündet.
35. Lenkerarmatur (410) umfassend ein Armaturengehäuse (432), dadurch gekennzeichnet, dass das Armaturengehäuse (432) einen Gehäusekörper (42) einer Gebereinheit (24) nach einem der voranstehenden Ansprüche ausbildet.
36. Lenkerarmatur (410) nach Ausführungsform 35, dadurch gekennzeichnet, dass die Lenkerarmatur (410) sich von einem Befestigungsbereich (433) in eine Erstreckungsrichtung (434) zu einer Betätigungsseite (44) erstreckt und dass bei einer funktionsgemäßen Ausrichtung (262) der in die Lenkerarmatur (410) integrierten Gebereinheit (24) die Erstreckungsrichtung (434) schräg zu der Schwerkraftrichtung (266) verläuft.
37. Fahrzeug (10), umfassend einen Rahmen (14) und mindestens zwei an dem Rahmen (14) drehbar gelagerte Räder (16, 18), dadurch gekennzeichnet, dass an dem in Fahrbereitschaft stehenden Fahrzeug (10) eine Gebereinheit (24) nach einem der voranstehenden Ansprüche in der funktionsgemäßen Ausrichtung (262) angeordnet ist.
38. Fahrzeug (10) nach Ausführungsform 37, dadurch gekennzeichnet, dass die funktionsgemäße Ausrichtung (262) der an das in Fahrbereitschaft auf einer horizontalen Standfläche (12) stehende Fahrzeug (10) angeordneten Gebereinheit (24) im Wesentlichen parallel oder schräg zu der Senkrechten (13) auf der horizontalen Standfläche (12) orientiert ist.
39. Fahrzeug (10) nach Ausführungsform 37 oder 38, dadurch gekennzeichnet, dass die funktionsgemäße Ausrichtung (262) der an das in Fahrbereitschaft auf einer horizontalen Standfläche (12) stehende Fahrzeug (10) angeordneten Gebereinheit (24) im Wesentlichen parallel oder schräg zu der Schwerkraftrichtung (266) und in die entgegengesetzte Richtung als die Schwerkraftrichtung (266) orientiert ist.
40. Fahrzeug (10) nach einer der Ausführungsformen 37 bis 39, dadurch gekennzeichnet, dass die funktionsgemäße Ausrichtung (262) der an das in Fahrbereitschaft auf einer horizontalen Standfläche (12) stehende Fahrzeug (10) angeordneten Gebereinheit (24) im Wesentlichen parallel oder schräg zu einer Längsmittelebene (11) des Fahrzeugs (10) liegt und im Wesentlichen senkrecht oder schräg zu einer durch die Mittelpunkte der mindestens zwei Räder (16, 18) definierten, geometrischen Verbindungslinie (19) steht.
41. Fahrzeug (10) nach einer der Ausführungsformen37 bis 40, dadurch gekennzeichnet, dass die an das Fahrzeug (10) angeordnete Gebereinheit (24) in eine Lenkerarmatur (410), insbesondere in eine Lenkerarmatur (410) nach Anspruch 35 oder 36, integriert ist.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine schematische Darstellung eines Zweirads mit einer an diesem angeordneten erfindungsgemäßen Gebereinheit;
- Fig. 2: einen Schnitt durch ein erstes Ausführungsbeispiel einer erfindungsgemäßen Gebereinheit;
- Fig. 3: einen Schnitt durch einen Gehäusekörper der Gebereinheit gemäß Fig. 2 ohne zusätzlich eingebaute Teile;
- Fig. 4: eine ausschnittsweise vergrößerte Darstellung der Gebereinheit gemäß Fig. 2, wobei eine Ventileinheit in einer Schließstellung steht und ein Kolben in einer Druckstellung steht;
- Fig. 5: eine ausschnittsweise vergrößerte Darstellung der Gebereinheit gemäß Fig. 2, wobei die Ventileinheit in einer Öffnungsstellung steht und der Kolben in einer Ausgangsstellung steht;
- Fig. 6: einen Schnitt ähnlich Fig. 2 durch ein zweites Ausführungsbeispiel einer erfindungsgemäßen Gebereinheit;
- Fig. 7: einen Schnitt ähnlich Fig. 2 durch ein drittes Ausführungsbeispiel einer erfindungsgemäßen Gebereinheit;
- Fig. 8: eine ausschnittsweise Darstellung eines lenkergesteuerten Fahrzeugs mit einer erfindungsgemäßen Lenkerarmatur, in welche eine Gebereinheit integriert ist, gemäß einem vierten Ausführungsbeispiel;
- Fig. 9: eine ausschnittsweise vergrößerte Darstellung gemäß Fig. 8 in einem Bereich eines Lenkers des lenkergesteuerten Fahrzeugs, wobei die Lenkerarmatur in einer Schnittansicht dargestellt ist, und
- Fig. 10: einen weiteren Schnitt durch einen Lenker mit der Lenkerarmatur gemäß dem vierten Ausführungsbeispiel.

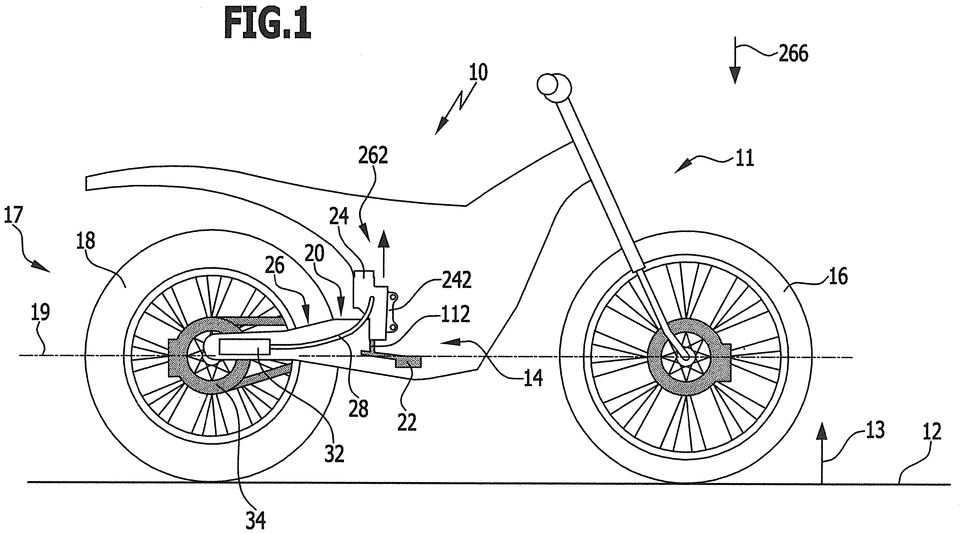

Beispielhaft für ein lenkergeführtes Fahrzeug ist in Fig. 1 ein als Ganzes mit 10 bezeichnetes Zweirad, insbesondere ein Motorrad, durch welches eine von einem bezogen auf eine Fahrtrichtung einer Geradeausfahrt vorne liegenden Endbereich zu einem bezogen auf die Fahrtrichtung bei der Geradeausfahrt hinten liegenden Endbereich sich erstreckende Längsmittelebene 11, die in Fig. 1 parallel zur Darstellungsebene ist, verläuft und welches in Fahrbereitschaft auf einer horizontalen Standfläche 12, welche in Fig. 1 senkrecht zur Darstellungsebene steht und die Senkrechte 13 auf der horizontalen Standfläche 12 in der Darstellungsebene der Fig. 1 liegt, dargestellt.

Das Zweirad 10 umfasst einen Rahmen 14 sowie ein drehbar gelagertes Vorderrad 16 und ein in einer Hinterradebene 17, welche parallel zur Längsmittelebene 11 ist und in Fig. 1 in der Darstellungsebene liegt, drehbar gelagertes Hinterrad 18, wobei durch die Mittelpunkte des Vorderrads 16 und des Hinterrads 18 eine geometrische Verbindungslinie 19 definiert wird.

Das Zweirad 10 ist mit einem als Ganzes mit 20 bezeichneten hydraulischen Bremssystem versehen, welches ein Betätigungselement 22, beispielsweise ein Fußpedal, umfasst, welches auf eine Gebereinheit 24 einwirkt.

Die Gebereinheit 24 ist Teil eines Hydrauliksystems 26, welches neben der Gebereinheit 24 noch eine Hydraulikleitung 28 umfasst, die von der Gebereinheit 24 zu einem hydraulischen Bremszylinder 32 führt, mit welchem eine Bremseinheit 34, beispielsweise eine dem Hinterrad 18 zugeordnete Bremseinheit 34, betätigbar ist.

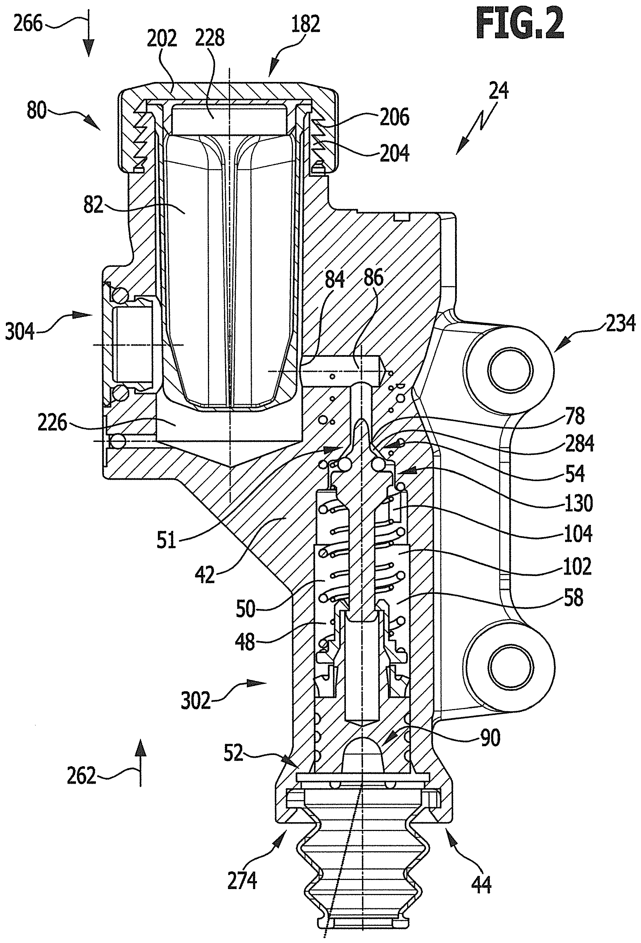

Zum Betätigen des hydraulischen Bremszylinders 32 wird von der Gebereinheit 24 eine Druckerhöhung im Hydrauliksystem erzeugt, die wiederum zu einem Einwirken des hydraulischen Bremszylinders 32 auf die Bremseinheit 34 führt. Ein erstes Ausführungsbeispiel einer erfindungsgemäßen Gebereinheit 24, dargestellt in Fig. 2, umfasst einen Gehäusekörper 42, der einteilig ausgebildet ist.

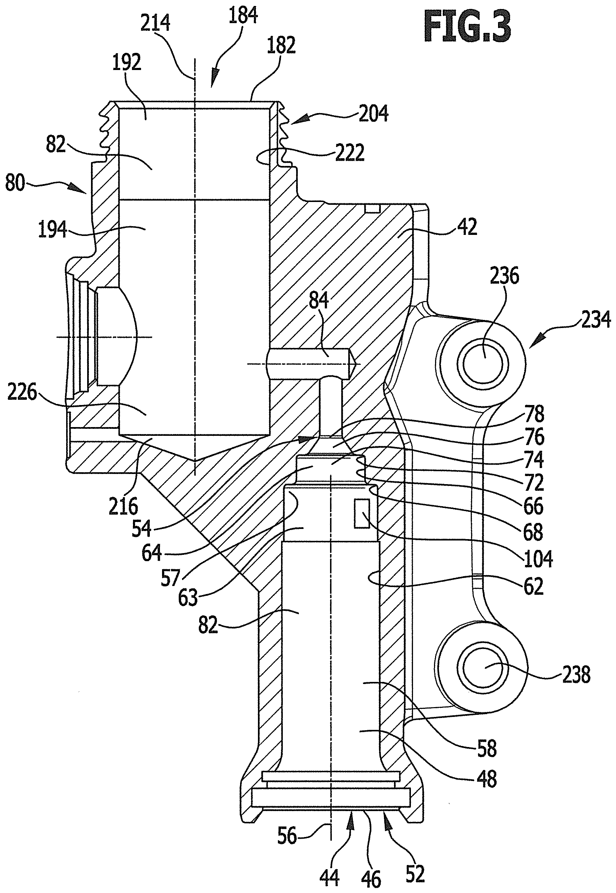

Der Gehäusekörper 42, welcher zusätzlich in Fig. 3 ohne eingesetzte Teile dargestellt ist, weist eine Betätigungsseite 44 mit einer Betätigungsöffnung 46 auf, die beispielsweise dem Betätigungselement 22 zugewandt ist.

Ausgehend von der Betätigungsöffnung 46 erstreckt sich, wie in Fig. 2 dargestellt, eine als Ganzes mit 48 bezeichnete Zylinderbohrung in den Gehäusekörper 42 hinein, welche eine Zylinderkammer 50 und einen Ventilsitz 51 eines nachfolgend beschriebenen Ventils umfasst.

Die Zylinderbohrung 48 verläuft von einem der Betätigungsöffnung 46 zugewandten ersten Endbereich 52 bis zu einem in dem Gehäusekörper 42 liegenden zweiten Endbereich 54 und erstreckt sich dabei koaxial zu einer Zylinderbohrungsachse 56 von dem ersten Endbereich 52 zum zweiten Endbereich 54.

Die Zylinderbohrung 48 weist einen sich ausgehend vom ersten Endbereich 52 bis zu einem Führungsendbereich 57 erstreckenden Führungsabschnitt 58 mit zylindrisch zur Zylinderbohrungsachse 56 verlaufenden Zylinderwandflächen 62 auf, wobei in dem Führungsabschnitt 58 in sich senkrecht zur Zylinderbohrungsachse 56 erstreckenden geometrischen Querschnittsebenen die Querschnittsfläche der Zylinderbohrung 48 konstant ist.

Beispielsweise ist in einem in dem Führungsendbereich 57 angeordneten Zwischenbereich 63 der Zylinderbohrung 48 in sich senkrecht zur Zylinderbohrungsachse 56 erstreckenden geometrischen Querschnittsebenen eine gegenüber der Querschnittsfläche in dem Führungsabschnitt 58 verkleinerte Querschnittsfläche vorgesehen.

Ausgehend von dem Führungsabschnitt 58 erstreckt sich zwischen diesem und dem zweiten Endbereich 54 ein Endabschnitt 64 der Zylinderbohrung 48, in welchem zylindrisch zur Zylinderbohrungsachse 56 verlaufende Wandflächen 66 sich von einer endseitig des Führungsendbereichs 57 angeordneten ersten Schulter 68 bis zu einer zweiten Schulter 72 erstrecken und einen Aufnahmeabschnitt 74 bilden, der an der zweiten Schulter 72 endet.

An den Aufnahmeabschnitt 74 schließt sich in dem Endabschnitt 64 der Zylinderbohrung 48 ein Verjüngungsabschnitt 76 an, welcher beispielsweise eine konisch zur Zylinderbohrungsachse 56 verlaufende Form aufweist, wobei sich der Verjüngungsabschnitt 76 ausgehend von der zweiten Schulter 72 mit zunehmender Erstreckung entlang der Zylinderbohrungsachse 56 in Richtung des zweiten Endbereichs 54 zunehmend verengt und in eine erste Mündungsöffnung 78 übergeht, welche an den zweiten Endbereich 54 und endseitig der Zylinderbohrung 48 angeordnet ist.

Vorzugsweise ist die erste Mündungsöffnung 78 konzentrisch zur Zylinderbohrungsachse 56 angeordnet, es besteht aber auch die Möglichkeit, die erste Mündungsöffnung 78 seitlich zur Zylinderbohrungsachse 56 versetzt vorzusehen.

Der Führungsabschnitt 58 und der Endabschnitt 64 bilden die Zylinderkammer 50, die mit einem in einem als Ganzes mit 80 bezeichnetem Vorratsbehälter vorgesehenem Vorratsraum 82, in welchem Hydraulikmedium vorgehalten wird, in Verbindung steht, und zwar über einen durch eine zweite Mündungsöffnung 84 mit dem Vorratsraum 82 verbundenen und zur ersten Mündungsöffnung 78 führenden Verbindungskanal 86, um bei Verlust von Hydraulikmedium im Hydrauliksystem 26 Hydraulikmedium aus dem in dem Vorratsraum 82 vorhandenen Hydraulikmediumvorrat nachfüllen zu können.

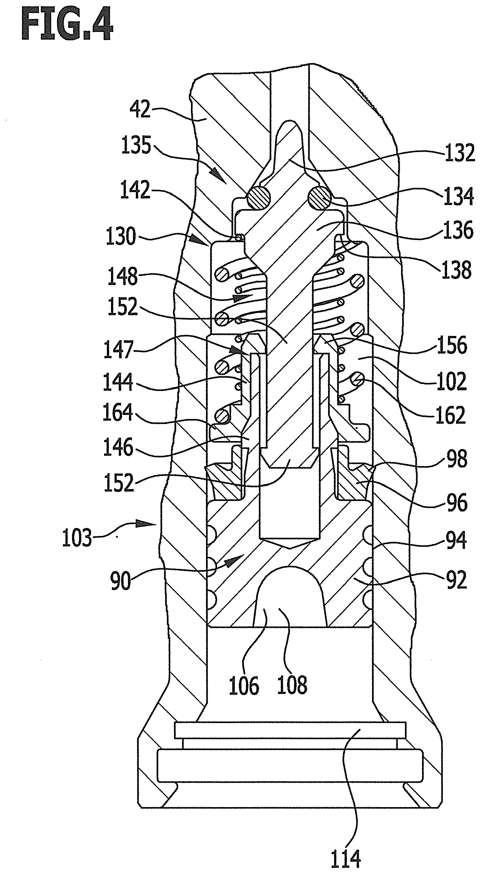

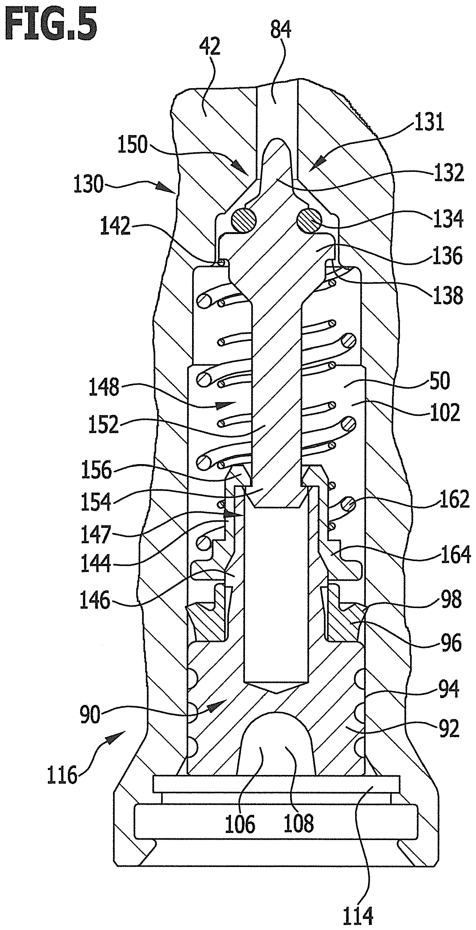

In der Zylinderkammer 50 ist, wie in den Fig. 4 und 5 ausschnittsweise vergrößert dargestellt, ein als Ganzes mit 90 bezeichneter Kolben in Richtung der Zylinderbohrungsachse 56 bewegbar angeordnet.

Der Kolben 90 umfasst dabei einen Führungskörper 92, welcher mit einer Umfangseite 94 an dem Führungsabschnitt 58 der Zylinderbohrung 48 gleitend geführt ist.

Ferner umfasst der Kolben 90 eine Dichtung 96, welche beispielsweise mit einer Dichtlippe 98 versehen ist, die dicht anliegend entlang dem Führungsabschnitt 58 gleitet, wobei die Dichtlippe 98 vorzugsweise auf einer dem zweiten Endbereich 54 zugewandten Seite des Führungskörpers 92 des Kolbens 90 angeordnet ist.

Der mit der Dichtung 96 dicht abschließend in dem Führungsabschnitt 58 geführte Kolben 90 begrenzt somit einen zwischen dem zweiten Endbereich 54 und dem Kolben 90 liegenden Druckraum 102 für Hydraulikmedium und ermöglicht es, dadurch, dass in einer Druckstellung 103 des Kolbens 90 der Kolben 90 in Richtung des zweiten Endbereichs 54 verschoben wird, den Druckraum 102 hinsichtlich seines Volumens zu reduzieren und somit ein Hydraulikmedium aus dem Druckraum 102 bei Ausbildung einer Druckerhöhung im Hydraulikmedium zu verdrängen.

Hierzu umfasst die Druckstellung 103 des Kolbens 90 mehrere Druckpositionen des Kolbens 90. Die verschiedenen Druckpositionen des Kolbens 90 unterscheiden sich hinsichtlich des durch diese festgelegten Volumens des Druckraums 102. In der Druckstellung 103 des Kolbens 90 ist der Kolben 90 von einer der mehreren Druckpositionen in eine andere der mehreren Druckpositionen beweglich und bei einer Bewegung in der Druckstellung 103 des Kolbens 90 von einer der mehreren Druckpositionen in eine andere, das Volumen des Druckraums 102 reduzierende Druckposition der mehreren Druckpositionen wird das Hydraulikmedium in dem Druckraum 102 unter Druck gesetzt und aus dem Druckraum 102 verdrängt.

Zur Ableitung von Hydraulikmedium aus dem Druckraum 102 ist in einer Seitenwand der Zylinderbohrung 48, vorzugsweise in einem innerhalb des Endabschnitts 64 oder innerhalb des Zwischenbereichs 63 liegenden Bereichs eine Verbindungsöffnung 104 vorgesehen, die mit der Hydraulikleitung 28 in Verbindung steht, so dass aus dem Druckraum 102 über die Verbindungsöffnung 104 austretendes Hydraulikmedium über die Hydraulikleitung 28 zum hydraulischen Bremszylinder 32 strömt.

Zur Verschiebung des Kolbens 90 ist dieser noch zusätzlich mit einer auf einer dem Druckraum 102 abgewandten Seite mit einem Beaufschlagungselement 106, beispielsweise ausgeführt in Form einer in den Führungskörper 92 hineinreichenden Vertiefung 108, versehen, wobei über das Beaufschlagungselement 106 eine Einwirkung des Betätigungselements 22 auf den Kolben 90 erfolgt.

Beispielsweise umfasst das Betätigungselement 22 eine Druckstange 112, die zur Betätigung des Kolbens 90 die Betätigungsöffnung 46 des Gehäusekörpers 42 durchgreift und auf das Beaufschlagungselement 106 wirkt und dabei beispielsweise in die Vertiefung 108 eingreift.

Ferner ist bei nicht betätigtem Betätigungselement 22 die Stellung des Kolbens 90, in welcher dieser mit dem Beaufschlagungselement 106 nahe des ersten Endbereichs 52 steht, durch ein Sicherungselement 114 festgelegt, welches, beispielsweise als Anschlag, eine Ausgangsstellung 116 des Kolbens 90 definiert, in welcher dieser den maximalen Abstand vom zweiten Endbereich 54 aufweist.

Um zu verhindern, dass bei einem Verschieben des Kolbens 90 zum Verdrängen von Hydraulikmedium aus dem Druckraum 102 dieses über den Verbindungskanal 86 in den Vorratsraum 82 des Vorratsbehälters 80 zurückströmt, ist eine als Ganzes mit 130 bezeichnete Ventileinheit vorgesehen, welche beim Zurückbewegen des Kolbens 90 in die Ausgangsstellung 116 öffnet und somit bei einem Mangel an Hydraulikmedium im Druckraum 102 Hydraulikmedium aus dem Vorratsraum 82 über den Verbindungskanal 86 in den Druckraum 102 einfließen lässt und welche durch das Bewegen des Kolbens 90 zum Verdrängen von Hydraulikmedium aus dem Druckraum 102 veranlasst schließt.

Der Ventilsitz 51 der Ventileinheit 130 ist zwischen dem Druckraum 102 und dem Vorratsraum 82, beispielsweise an den zweiten Endbereich 54 der Zylinderbohrung 48 angeordnet, wobei der Verjüngungsabschnitt 76 vorteilhafterweise den Ventilsitz 51 bildet.

Die Ventileinheit 130 umfasst einen mit dem Ventilsitz 51 zusammenwirkenden Ventilkörper 132, welcher einen Dichtring 134 trägt, der mit dem Ventilsitz 51 zusammenwirkt, um in einer in Fig. 4 dargestellten Schließstellung 135 der Ventileinheit 130 ein Ausströmen von Hydraulikmedium aus dem Druckraum 102 in den Verbindungskanal 86 zu verhindern.

Insbesondere sind dabei der Ventilkörper 132 und der Dichtring 134 so angeordnet, dass sie mit der Wandfläche des Ventilsitzes 51 zusammenwirken, um ein zuverlässiges Schließen der Ventileinheit 130 zu ermöglichen.

Zweckmäßigerweise ist der Ventilkörper 132 an einem im Aufnahmeabschnitt 74 angeordneten Stützkörper 136 gehalten, welcher eine Auflagefläche 138 für eine Druckfeder 142 aufweist, die durch Beaufschlagen des Stützkörpers 136 in Richtung des Ventilsitzes 51, beispielsweise in Richtung des zweiten Endbereichs 54, auch in gleicher Weise auf den Ventilkörper 132 wirkt und somit in der Schließstellung 135 diesen zusammen mit dem Dichtring 134 in den Ventilsitz 51 eindrückt.

Die Druckfeder 142 ist hierzu am Kolben 90, beispielsweise auf einer Stützhülse 144 abgestützt, die eine an den Führungskörper 92 angeformte und sich in Richtung des zweiten Endbereichs 54 erstreckende Führungshülse 146 umschließt und außerdem an dieser abgestützt ist.

Somit ist insbesondere der Ventilkörper 132 mit dem Dichtring 134 in Richtung des Ventilsitzes 51 durch die sich letztlich an dem Kolben 90 abstützende Druckfeder 142 in Richtung der Schließstellung 135 beaufschlagt.

Um außerdem sicherzustellen, dass die Ventileinheit 130 stets dann öffnet, wenn der Kolben 90 in seiner Ausgangsstellung 116 steht, wie in Fig. 5 dargestellt, sind die Ventileinheit 130 und der Kolben 90, solange der Kolben 90 in seiner Ausgangsstellung 116 steht, mittels einer Kopplungseinheit 147 gekoppelt und die Kopplungseinheit 147 entkoppelt die Ventileinheit 130 und den Kolben 90, wenn die Ventileinheit 130 in der Schließstellung 135 positioniert ist, so dass ein Verharren der Ventileinheit 130 in der Schließstellung 135 bei gleichzeitiger Bewegung des Kolbens 90 ermöglicht ist.

Hierzu ist der Ventilkörper 132, insbesondere mitsamt dem Stützkörper 136, über ein Kopplungselement 148 der Kopplungseinheit 147 mit dem Kolben 90 gekoppelt, wobei das Kopplungselement 148 dann, wenn der Kolben 90 in seiner Ausgangsstellung 116 steht, auf den Ventilkörper 132 entgegen der Kraft der Druckfeder 142 einwirkt und den Ventilkörper 132 mit dem Dichtring 134 von dem Ventilsitz 51 weg in Richtung des Kolbens 90 bewegt und somit die Ventileinheit 130 in einer Öffnungsstellung 150 hält, wobei in der Öffnungsstellung 150 die Ventileinheit 130 ein Zuströmen von Hydraulikmedium aus dem Vorratsraum 82 über den Verbindungskanal 86 und die erste Mündungsöffnung 78 zulässt.

Beispielsweise ist das Kopplungselement 148 als Stift 152 ausgebildet, welcher sich von dem Ventilkörper 132 in Richtung des Kolbens 90 erstreckt und einen Kopf 154 aufweist, welcher in die Führungshülse 146 eingreift und innerhalb dieser frei in Richtung der Zylinderbohrungsachse 56 bewegbar ist, jedoch durch einen, insbesondere radial zur Zylinderbohrungsachse 56 nach innen verlaufenden, eine Eingrifföffnung umfassenden Ringbund 156 der Stützhülse 144 in Eingriff mit der Führungshülse 146 in der Führungshülse 146 gehalten wird.

Der Ringbund 156 hält kurz vor Erreichen der Ausgangsstellung 116 des Kolbens 90 den Kopf 154 entgegen der Kraft der Druckfeder 142 in der Führungshülse 146 und nimmt so sich von dem Ventilsitz 51 entfernend den Kopf 154 mit dem Kolben 90 mit, so dass die Ventileinheit 130 öffnet.

Bewegt sich der Kolben 90 von der Ausgangsstellung 116 weg in Richtung der Druckstellung 103, liegt der Kopf 154 nur so lange am Ringbund 156 an, bis die Ventileinheit 130 die Schließstellung 135 erreicht hat und dann bewegt sich der Ringbund 156 von dem dann frei in der Führungshülse 146 angeordnetem Kopf 154 weg.

Um den Kopf 154 in der Führungshülse 146 zu halten ist entweder die Stützhülse 144 fest mit der Führungshülse 146 verbunden oder die Stützhülse 144 ist, wie bei dem beschriebenen Ausführungsbeispiel dargestellt, durch eine Kolbendruckfeder 162 beaufschlagt, welche die Stützhülse 144 stets in Anlage an der Führungshülse 146 hält.

Hierzu stützt sich die Kolbendruckfeder 162 einerseits an der Stützhülse 144, beispielsweise einem Ringflansch 164 derselben ab und andererseits an der ersten Schulter 68 der Zylinderbohrung 48.

Somit bewirkt die Kolbendruckfeder 162 stets eine Beaufschlagung des Kolbens 90 über die Stützhülse 144 und die Führungshülse 146 in Richtung seiner Ausgangsstellung 116 und hält andererseits gleichzeitig die Stützhülse 144 stets in Anlage an der Führungshülse 146, was gleichzeitig zur Folge hat, dass die Stützhülse 144 mit dem Ringbund 156 in der Ausgangsstellung 116 des Kolbens 90 auf den Kopf 154 des Stifts 152 einwirkt.

Damit hält das Kopplungselement 148 den Ventilkörper 132 mit dem Dichtring 134 in einer der Öffnungsstellung 150 der Ventileinheit 130 entsprechenden geöffneten Stellung.

Der Vorratsbehälter 80 umfasst eine Nachfüllöffnung 182, welche vorzugsweise an einer der Betätigungsseite 44 gegenüberliegenden Seite 184 des Gehäusekörpers 42 positioniert ist, und in einem ersten Bohrungsendbereich 192 einer den Vorratsraum 82 umfassenden zweiten Bohrung 194 angeordnet ist.

Über die mit dem Vorratsraum 82 verbundene Nachfüllöffnung 182 ist es möglich den in dem Vorratsraum 82 vorhandenen Hydraulikmediumvorrat wieder aufzufüllen, wobei ansonsten, das heißt solange der Vorratsraum 82 nicht aufgefüllt wird, der Vorratsraum 82 von der Umgebung außerhalb des Vorratsbehälters 80 abzutrennen ist und um das hierfür erforderliche Öffnen und Schließen der Nachfüllöffnung 182 zu ermöglichen, ist diese mit einem fixierbaren und wieder entfernbaren Deckel 202 versehen, so dass je nach Bedarf die Nachfüllöffnung 182 geöffnet oder verschlossen werden kann.

Beispielsweise ist hierzu der Deckel 202 mit einem zu einem an dem ersten Bohrungsendbereich 192 des Gehäusekörpers 42 vorgesehenen Außengewinde 204 passenden Innengewinde 206 versehen, so dass durch Verschrauben des Deckels 202 mit dem Gehäusekörper 42 die Nachfüllöffnung 182 verschlossen werden kann und für das Nachfüllen von Hydraulikmedium in den Vorratsraum 82 der Deckel 202 abgeschraubt werden kann und somit die Nachfüllöffnung 182 geöffnet werden kann.

Ausgehend von dem ersten Bohrungsendbereich 192 erstreckt sich die zweite Bohrung 194 koaxial zu einer zweiten Bohrungsachse 214 in den Gehäusekörper 42 bis zu einem in dem Gehäusekörper 42 liegenden zweiten Bohrungsendbereich 216 hinein.

In dem Ausführungsbeispiel gemäß Fig. 3 ist die zweite Bohrungsachse 214 relativ zur Zylinderbohrungsachse 56 versetzt angeordnet. Es ist aber auch denkbar, dass die zweite Bohrungsachse 214 und die Zylinderbohrungsachse 56 auf einer gemeinsamen Achse liegen.

Ferner ist denkbar, dass die zweite Bohrungsachse 214 und die Zylinderbohrungsachse 56 schräg zueinander verlaufen.

Die zweite Bohrung 194 weist eine von dem ersten Bohrungsendbereich 192 bis zu dem zweiten Bohrungsendbereich 216 zur zweiten Bohrungsachse 214 zylindrisch verlaufende Bohrungswandfläche 222 auf, welche den mit der Nachfüllöffnung 182 in Verbindung stehenden Vorratsraum 82 umschließt.

Der Vorratsraum 82 steht über die, vorzugsweise in der Bohrungswandfläche 222 liegenden zweiten Mündungsöffnung 84 mit dem Verbindungskanal 86 in Verbindung, wobei der Verbindungskanal 86 sich von der zweiten Mündungsöffnung 84 bis zu der ersten Mündungsöffnung 78 erstreckt und dadurch den Vorratsraum 82 mit dem Druckraum 102 verbindet.

Beispielsweise liegt in dem zweiten Bohrungsendbereich 216 ein Sammelbereich 226 für Schmutzpartikel, welche das in dem Vorratsraum 82 bevorratete Hydraulikmedium verunreinigen, so dass diese Schmutzpartikel sich in dem Sammelbereich 226 ansammeln und nicht über die zweite Mündungsöffnung 84 in den Verbindungskanal 86 entweichen und weiter in den Druckraum 102 gelangen.

Zur Begrenzung und Abdichtung des Vorratsraums 82 ist in der zweiten Bohrung 194 ein, beispielsweise an dem Deckel angeordneter Balg 228 vorgesehen.

Um die Gebereinheit 24 an dem Zweirad 10 zu befestigen ist vorzugsweise an dem Gehäusekörper 42 eine Haltevorrichtung 234 angeordnet, beispielsweise zwei Bohrungen 236 und 238, welche an einer Befestigungsvorrichtung 242 des Rahmens 14 montierbar ist.

Die Gebereinheit 24 ist, beispielsweise mittels der Befestigungsvorrichtung 242, an dem Zweirad 10 in einer funktionsgemäßen Ausrichtung 262 angeordnet, wobei unter der funktionsgemäßen Ausrichtung 262 eine Ausrichtung der Gebereinheit 24 zu verstehen ist, in welcher die Gebereinheit 24 ihre bestimmungsgemäße Funktion im Wesentlichen erfüllen kann.

Die in Fig. 1 und 2 dargestellte funktionsgemäße Ausrichtung 262 ist insbesondere eine von mehreren möglichen funktionsgemäßen Ausrichtungen der Gebereinheit 24.

In Fig. 2 ist eine Schwerkraftrichtung 266 und die Gebereinheit 24 in der funktionsgemäßen Ausrichtung 262 parallel und in die entgegengesetzte Richtung als die zur Schwerkraftrichtung 266 orientiert dargestellt.

Hierbei ist die Betätigungsseite 44 des Gehäusekörpers 42 eine bei der funktionsgemäßen Ausrichtung 262 der Gebereinheit 24 bezogen auf die Schwerkraftrichtung 266 unten liegende Seite 274 des Gehäusekörpers 42.

Dabei liegt der erste Endbereich 52 bei der funktionsgemäßen Ausrichtung 262 der Gebereinheit 24 bezogen auf die Schwerkraftrichtung 266 unterhalb des zweiten Endbereichs 54.

Die Zylinderbohrungsachse 56 ist beispielsweise bei der funktionsgemäßen Ausrichtung 262 der Gebereinheit 24 im Wesentlichen parallel oder schräg zu der Schwerkraftrichtung 266 orientiert, wobei unter einer im Wesentlichen parallelen oder schrägen Orientierung der Gebereinheit 24 relativ zu der Schwerkraftrichtung 266 eine parallele Orientierung der Gebereinheit 24 relativ zu der Schwerkraftrichtung 266 oder eine Orientierung der Gebereinheit 24 relativ zu der Schwerkraftrichtung 266 in einem Winkel von bis zu 50°, insbesondere von bis zu 40°, bevorzugt von bis zu 30°, besonders vorteilhaft von bis zu 20° zu verstehen ist.

Der Verjüngungsabschnitt 76 verjüngt sich vorzugsweise bei der funktionsgemäßen Ausrichtung 262 der Gebereinheit 24 im Wesentlichen antiparallel zu der Schwerkraftrichtung 266, wobei unter einer im Wesentlichen zur Schwerkraftrichtung 266 antiparallelen Verjüngung insbesondere zu verstehen ist, dass der Verjüngungsabschnitt 76 entgegengesetzt zur Schwerkraftrichtung 266 konisch zusammenläuft.

Zweckmäßigerweise liegt der Druckraum 102 bei der funktionsgemäßen Ausrichtung 262 der Gebereinheit 24 bezogen auf die Schwerkraftrichtung 266 über dem Kolben 90 in der Zylinderkammer 50.

Ferner mündet die erste Mündungsöffnung 78 in einen bei der funktionsgemäßen Ausrichtung 262 der Gebereinheit 24 bezogen auf die Schwerkraftrichtung 266 höchstliegenden Endbereich 284 des Druckraums 102.

Insbesondere liegt die erste Mündungsöffnung 78 bei der funktionsgemäßen Ausrichtung 262 der Gebereinheit 24 bezogen auf die Schwerkraftrichtung 266 unterhalb der zweiten Mündungsöffnung 84.

Ferner liegt die zweite Mündungsöffnung 84 bei der funktionsgemäßen Ausrichtung 262 der Gebereinheit 24 bezogen auf die Schwerkraftrichtung 266 oberhalb des Sammelbereichs 226 des Vorratsraums 82.

Dadurch dass der Sammelbereich 226 in einem bei der funktionsgemäßen Ausrichtung 262 der Gebereinheit 24 bezogen auf die Schwerkraftrichtung 226 tiefliegendsten Endbereich der zweiten Bohrung 194, insbesondere unterhalb des Vorratsraums 82 liegt, ist eine Ansammlung von Schmutzpartikeln darin ermöglicht.

Günstigerweise ist die zweite Bohrungsachse 214 bei der funktionsgemäßen Ausrichtung 262 der Gebereinheit 24 im Wesentlichen parallel oder schräg zu der Schwerkraftrichtung 266 orientiert, wobei unter einer im Wesentlichen parallelen oder schrägen Orientierung der Gebereinheit 24 relativ zu der Schwerkraftrichtung 266 eine parallele Orientierung der Gebereinheit 24 relativ zu der Schwerkraftrichtung 266 oder eine Orientierung der Gebereinheit 24 relativ zu der Schwerkraftrichtung 266 in einem Winkel von bis zu 50°, insbesondere von bis zu 40°, bevorzugt von bis zu 30°, besonders vorteilhaft von bis zu 20° zu verstehen ist.

Somit liegt auch die Nachfüllöffnung 182 an einer bei der funktionsgemäßen Ausrichtung 262 der Gebereinheit 24 bezogen auf die Schwerkraftrichtung 266 oben liegenden Seite des Gehäusekörpers 42.

Die vorstehend beschriebene Anordnung erlaubt ein selbstregulierendes Entlüften des Druckraums 102 bei der funktionsgemäßen Ausrichtung 262 der Gebereinheit 24, da der Druckraum 102 in einem bezogen auf die Schwerkraftrichtung 266 unteren Bereich 302 des Gehäusekörpers 42 und der Vorratsraum 82 in einem bei der funktionsgemäßen Ausrichtung 262 der Gebereinheit 24 bezogen auf die Schwerkraftrichtung 266 oberen Bereich 304 des Gehäusekörpers 42 liegen.

Zweckmäßigerweise ist der Verbindungskanal 86 bei der funktionsgemäßen Ausrichtung 262 der Gebereinheit 24 bezogen auf die Schwerkraftrichtung 266 von dem Druckraum 102 ausgehend im Wesentlichen aufsteigend zum Vorratsraum 82 ausgebildet, so dass, wenn die Ventileinheit 130 in der Öffnungsstellung 150 positioniert ist, in dem Druckraum 102 möglicherweise vorhandene Luftbläschen unter der Wirkung der Schwerkraft aus dem Druckraum 102 über die in den bei der funktionsgemäßen Ausrichtung 262 der Gebereinheit 24 bezogen auf die Schwerkraftrichtung 266 höchstliegenden Endbereich 284 des Druckraums 102 mündende erste Mündungsöffnung 78 entweichen und durch den Verbindungskanal 86 in den Vorratsraum 82 gelangen.

Damit reduziert sich die Anzahl der möglicherweise im Druckraum 102 vorhandenen Luftbläschen und in optimaler Weise sind keine Luftbläschen mehr in dem Druckraum 102 vorhanden, so dass das unter Druck setzen des Hydraulikmediums in dem Druckraum 102 weniger bis gar nicht durch Luftbläschen beeinträchtigt wird.

Die Ausgestaltung der Gebereinheit 24 ermöglicht ein selbstregulierendes Nachfüllen mit Hydraulikmedium in den Druckraum 102, dadurch, dass in dem Vorratsraum 82 bevorratetes Hydraulikmedium zur Verfügung steht, welches, wenn der Kolben 90 in der Ausgangsstellung 116 und die Ventileinheit 130 in der Öffnungsstellung 150 stehen, beispielsweise durch einen von dem Balg 228 erzeugten Überdruck gedrängt durch den Verbindungskanal 86 in den Druckraum 102 eintritt und dort einen Mangel an Hydraulikmedium ausgleicht.

Kurz zusammengefasst funktioniert die Gebereinheit wie folgt:
Um Hydraulikmedium in dem Druckraum 102 unter Druck zu setzen, wird bei Betätigung des Betätigungselements 22, eine Kraft auf den Kolben 90 ausgeübt, wodurch der Kolben 90 in eine das Volumen des Druckraums verkleinernde Richtung aus der Ausgangsstellung 116 herausbewegt wird.

Durch die Bewegung des Kolbens 90 aus der Ausgangsstellung 116 in eine das Volumen des Druckraums verkleinernde Richtung wird der Ventilkörper 132 in dieselbe Richtung mitgeführt und die Ventileinheit 130 geht in die Schließstellung 135 über, so dass das in dem Druckraum 102 unter Druck gesetzte Hydraulikmedium aus dem Druckraum 102 durch die Verbindungsöffnung 104 verdrängt wird und über die Hydraulikleitung 28 zum hydraulischen Bremszylinder 32 gelangt, wodurch dieser die Bremswirkung der Bremseinheit 34 auslöst.

Wird das Betätigungselement 22 nicht mehr betätigt, so wird der Kolben 90 durch die Spannkraft der Kolbendruckfeder 162 wieder in die Ausgangsstellung 116 versetzt und durch das Einwirken des Kopplungselements 148 öffnet die Ventileinheit 130.

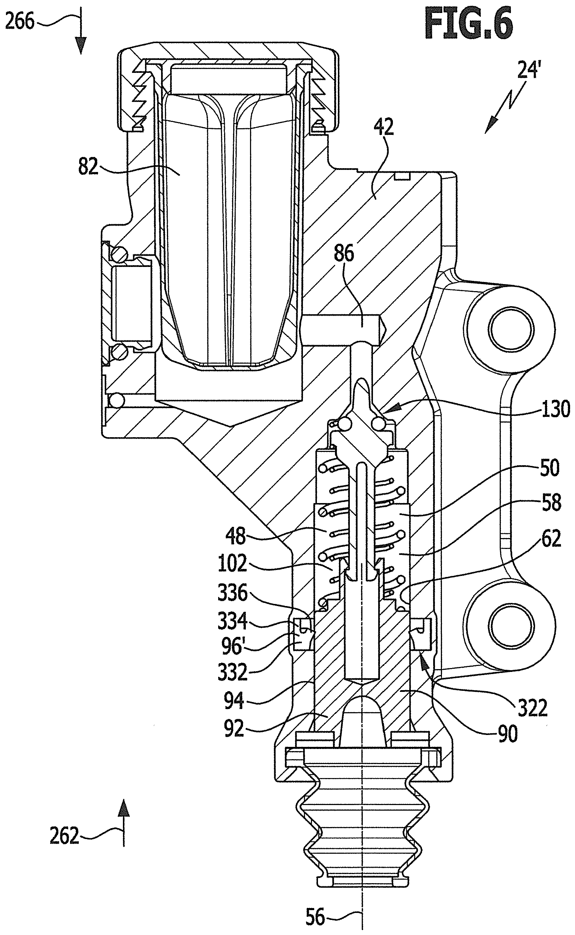

Bei einem zweiten Ausführungsbeispiel einer erfindungsgemäßen Gebereinheit 24', dargestellt in Fig. 6, sind diejenigen Teile, die mit denen des ersten Ausführungsbeispiels identisch sind, mit denselben Bezugszeichen versehen, so dass diesbezüglich vollinhaltlich auf die Ausführungen zum ersten Ausführungsbeispiel verwiesen werden kann.

Im Gegensatz zum ersten Ausführungsbeispiel ist bei dem zweiten Ausführungsbeispiel die Dichtung 96' nicht an dem Kolben 90 angeordnet, sondern in dem Führungsabschnitt 58 an den Gehäusekörper 42 angeordnet.

Hierzu umfasst die Zylinderbohrung 48 eine die Zylinderbohrungsachse 56 geschlossen umlaufende und die Zylinderwandfläche 62 einschneidende Nut 322, wobei die Nut 322 derart in dem Führungsabschnitt 58 positioniert ist, dass in allen Druckpositionen der Druckstellung 103 des Kolbens 90 ein Teilbereich der Umfangseite 94 des Führungskörpers 92 des Kolbens 90 dichtend an die Dichtung 96' anliegt.

Die Nut 322 ist derart dimensioniert, dass sie einen Dichtungsinnenkörper 332 der Dichtung 96' aufnimmt. An dem Dichtungsinnenkörper 332 sind beispielsweise mehrere Dichtlippen 334 und 336 angeordnet, wobei eine der Dichtlippen 334, 336 an einer Innenwand der Nut 322 anliegt und eine andere der Dichtlippen 334, 336 sich von dem Dichtungsinnenkörper 332 abspreizt und dabei an dem Kolben 90 anlegt.

Damit bildet eine der Dichtlippen 334, 336 eine Dichtlinie mit dem Gehäusekörper 42 und eine der Dichtlippen 334, 336 bildet mit dem Kolben 90, insbesondere mit der Umfangseite 94 des Führungskörpers 92, eine Dichtlinie, und da der Kolben 90 in jeder Druckposition der Druckstellung 103 an der einen der Dichtlippen 334, 336 anliegt ist der Druckraum 102 mediendicht, insbesondere hydraulikmediumdicht und luftdicht abgeschlossen.

Im Übrigen sind alle weiteren Teile der Gebereinheit mit denen des voranstehenden oder des nachfolgenden Ausführungsbeispiels identisch, so dass auf die Ausführungen im Zusammenhang mit diesen Ausführungsbeispielen vollinhaltlich verwiesen wird.

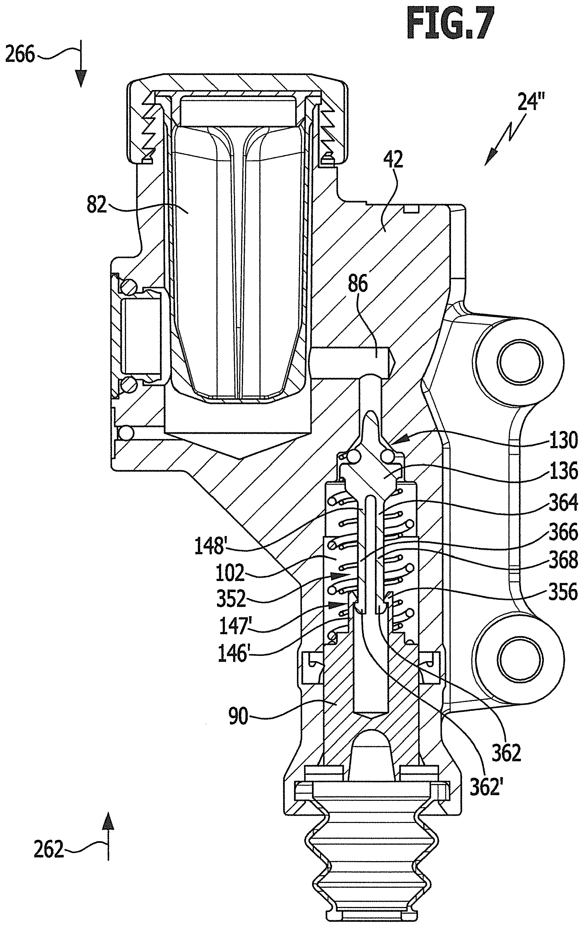

Bei einem dritten Ausführungsbeispiel einer erfindungsgemäßen Gebereinheit 24", dargestellt in Fig. 7, sind diejenigen Teile, die mit denen der voranstehenden Ausführungsbeispiele identisch sind, mit denselben Bezugszeichen versehen, so dass hinsichtlich deren Beschreibung vollinhaltlich auf die Ausführungen zu den voranstehenden Ausführungsbeispielen Bezug genommen werden kann.

Im Gegensatz zu dem ersten Ausführungsbeispiel umfasst bei dem dritten Ausführungsbeispiel die Kopplungseinheit 147' eine in die Führungshülse 146' eingreifende Schnappvorrichtung 352.

Dabei umschließt ein, insbesondere radial zur Zylinderbohrungsachse 56 nach innen verlaufender, eine Eingrifföffnung umfassender, Ringbund 356 die Öffnung der Führungshülse 146' und dient als Anschlag für eine Kopplungsschulter 362 des bei dieser Ausführungsform als ein sich radial zu der Zylinderbohrungsachse 56 spreizendes Schnappelement 364 ausgebildeten Kopplungselements 148'.

Beispielsweise umfasst das Schnappelement 364 zwei Arme 366 und 368, mit je zwei, gegenüberliegenden, längsseitigen Enden, wobei die Arme 366, 368 an einem ihrer längsseitigen Enden an dem Stützkörper 136 angeordnet sind und an dem anderen längsseitigen Ende die Kopplungsschulter 362, 362' aufweisen.

Die Arme 366 und 368 des Schnappelements 364 lassen sich quer zu ihrer Längserstreckung radial nach innen zusammendrücken, so dass die Kopplungsschultern 362 und 362' eng beieinander liegen und durch die durch den Ringbund 356 teilweise bedeckte Öffnung der Führungshülse 146' in die Führungshülse 146' eingeführt werden können. In einer einwirkungsfreien Stellung spreizen sich die Arme 366 und 368 in relativ zur Zylinderbohrungsachse 56 radialer Richtung auseinander, so dass die Kopplungsschultern 362 und 362' beabstandet sind und der Ringbund 356 die Arme 366 und 368 an ihren Kopplungsschultern 362 und 362' in der Führungshülse 146' hält.

Die Funktionsweise der Kupplungseinheit 147' mit der Schnappvorrichtung 352, insbesondere das Zusammenwirken des Ringbunds 356 mit dem Schnappelement 364 und dessen Kopplungsschulter 362 erfolgt in analoger Weise zu der Kopplungseinheit 147, insbesondere dem Ringbund 156 und dem Kopf 152, so dass diesbezüglich auf die Ausführungen zum ersten Ausführungsbeispiel verwiesen werden kann.

Im Übrigen sind alle weiteren Teile mit denen von einem der voranstehenden Ausführungsbeispiele identisch, insbesondere kann die Kopplungseinheit 147' mit der Dichtung 96 gemäß dem ersten Ausführungsbeispiel als auch mit der Dichtung 96' gemäß dem zweiten Ausführungsbeispiel kombiniert werden, so dass auf die Ausführungen im Zusammenhang mit diesen Ausführungsbeispielen vollinhaltlich verwiesen wird.

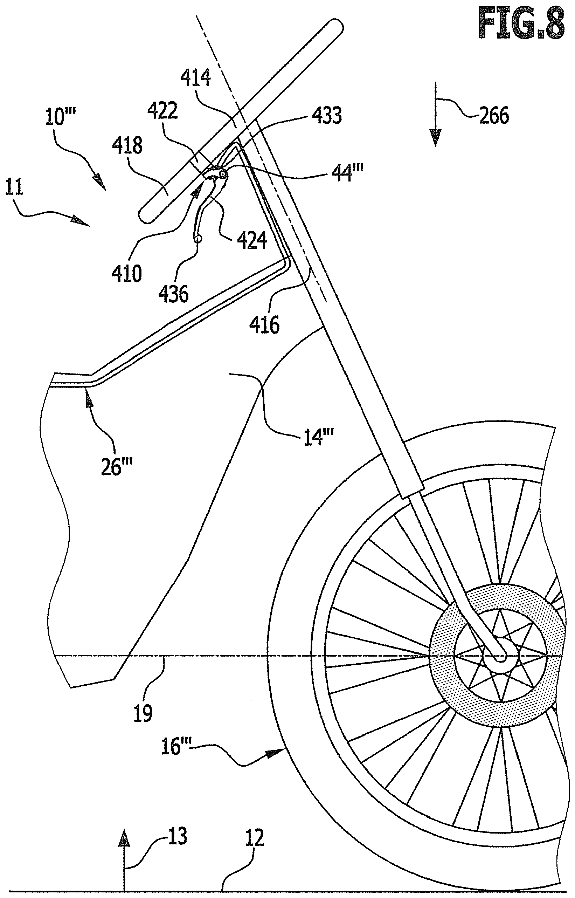

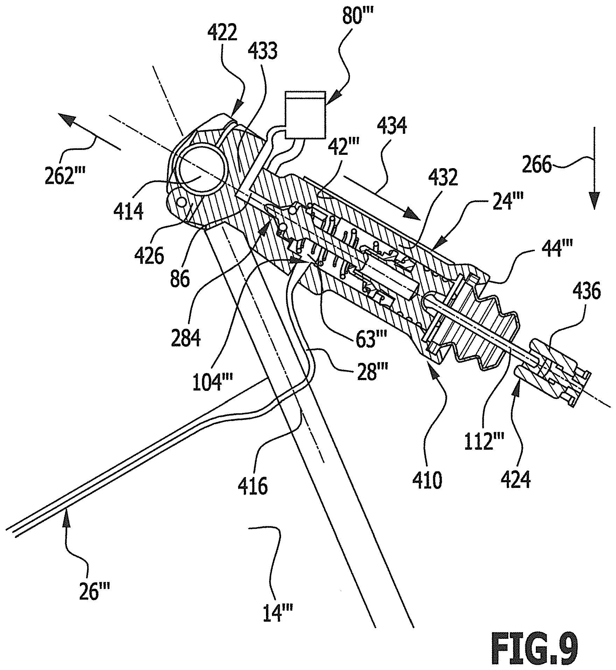

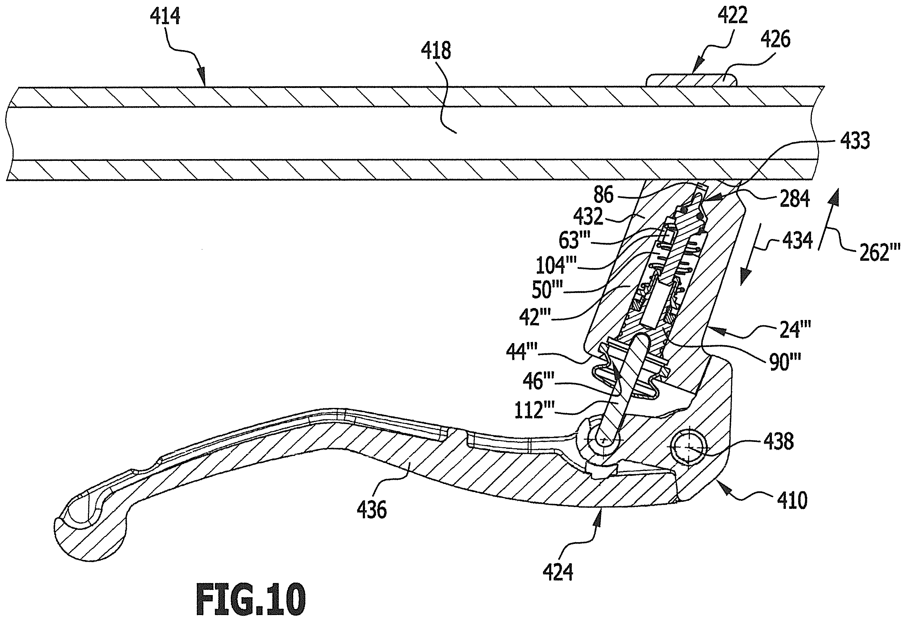

Bei einem vierten Ausführungsbeispiel einer erfindungsgemäßen Gebereinheit 24"', beispielhaft dargestellt in den Fig. 8, 9 und 10, sind diejenigen Teile, die mit denen der voranstehenden Ausführungsbeispiele identisch sind, mit denselben Bezugszeichen versehen, so dass hinsichtlich deren Beschreibung vollinhaltlich auf die Ausführungen zu den voranstehenden Ausführungsbeispielen Bezug genommen werden kann.

Bei dem vierten Ausführungsbeispiel ist eine Gebereinheit 24"' in eine Lenkerarmatur 410 für ein lenkergesteuertes Fahrzeug 10"' integriert.

Das lenkergesteuerte Fahrzeug 10"' umfasst einen Lenker 414, welcher um eine Lenkachse 416 drehbar an einem Rahmen 14"'des Fahrzeuges 10"' angeordnet ist und mit welchem ein Vorderrad 16"' des Fahrzeuges 10"' lenkbar ist.

In einem Bereich eines Lenkergriffs 418 des Lenkers 414 ist die Lenkerarmatur 410 mit einer Befestigungsvorrichtung 422 angeordnet, so dass ein Fahrer des Fahrzeugs 10"' mit einer an dem Lenkergriff 418 positionierten Hand eine Betätigungsvorrichtung 424 der Lenkerarmatur 410 betätigen kann.

Die Lenkerarmatur 410 ist als hängende Lenkerarmatur 410 ausgebildet, so dass bei dem in Fahrbereitschaft auf einer horizontalen Standfläche 12 stehenden Fahrzeug 10"' die Lenkerarmatur 410 bezogen auf die Schwerkraftrichtung 266 im Wesentlichen unterhalb des Lenkers 414 angeordnet ist.

Beispielsweise umgreift ein Verschlussteil 426 der Befestigungsvorrichtung 422 den Lenker 414 und ausgehend von dem Verschlussteil 426 erstreckt sich die Lenkerarmatur 410 bezogen auf die Schwerkraftrichtung 266 schräg nach unten und bezogen auf eine Fahrtrichtung bei einer Geradeausfahrt des Fahrzeugs 10"' schräg nach vorne.

Insbesondere erstreckt sich ein Armaturengehäuse 432 von einem Befestigungsbereich 433, in welchem die Befestigungsvorrichtung 422 angeordnet ist, in eine Erstreckungsrichtung 434 bis zu einer Betätigungsseite 44"'.

Dabei verläuft die Erstreckungsrichtung 434 bei der in einer funktionsgemäßen Ausrichtung 262"' an dem Lenker 414 angeordneten Lenkerarmatur 410 schräg zu der Schwerkraftrichtung 266, beispielsweise in einem Winkel zu der Schwerkraftrichtung 266, der höchstens 60° groß ist.

Die Betätigungsvorrichtung 424 umfasst einen Hebel 436, welcher um eine Hebelachse 438 drehbar an dem Armaturengehäuse 432 angeordnet ist, sowie eine an dem Hebel 436 angeordnete Druckstange 112"'.

Das Armaturengehäuse 432 bildet einen Gehäusekörper 42"' der Gebereinheit 24"' aus.

Das Armaturengehäuse 432 umschließt eine Zylinderkammer 50"', in welcher ein Kolben 90"' beweglich angeordnet ist.

Die Druckstange 112"' greift durch eine Betätigungsöffnung 46"' des Armaturengehäuses 432, welche an der Betätigungsseite 44"' angeordnet ist, in die Zylinderkammer 50"' hinein und bei einer Betätigung des Hebels 436 beaufschlagt die Druckstange 112"' den Kolben 90"'.

Ein den Vorratsraum 82 umfassender Vorratsbehälter 80"' ist bei diesem Ausführungsbeispiel als ein separater Behälter ausgebildet und mit einem Befestigungselement an der Lenkerarmatur 410 angeordnet.

Bei einer Variante ist jedoch vorgesehen, dass der Vorratsbehälter 80"' in die Lenkerarmatur 410 integriert ist, dass also das Armaturengehäuse 432 den Vorratsbehälter 80"' umfasst.

Die Gebereinheit 24"' ist über eine Verbindungsöffnung 104"' mit einer Hydraulikleitung 28"' eines Hydrauliksystems 26"' verbunden.

Das Hydrauliksystem 26"' ist beispielsweise ein Hydrauliksystem eines hydraulischen Kupplungssystems.

Bei einer Variante ist vorgesehen, dass das Hydrauliksystem 26"' Bestandteil eines hydraulischen Bremssystems ist.

Die Verbindungsöffnung 104"' ist in einem Zwischenbereich 63"' der Zylinderkammer 50"' angeordnet, wobei der Zwischenbereich 63"' von dem bei einer funktionsgemäßen Ausrichtung 262"' der Gebereinheit 24"' bezogen auf die Schwerkraftrichtung 266 höchstliegenden Endbereich 284 beabstandet ist.

Im Übrigen sind alle weiteren Teile mit denen von einem der voranstehenden Ausführungsbeispiele identisch, so dass auf die Ausführungen im Zusammenhang mit diesen Ausführungsbeispielen vollinhaltlich verwiesen werden kann.

## Patentansprüche

1. Gebereinheit (24), insbesondere für ein hydraulisches Bremssystem (20) oder für ein hydraulisches Kupplungssystem, umfassend einen Gehäusekörper (42), einen Kolben (90) der in dem Gehäusekörper (42) zwischen einer Ausgangsstellung (116) und einer Druckstellung (103) beweglich angeordnet ist, einen durch den Gehäusekörper (42) und den Kolben (90) begrenzten Druckraum (102), einen über einen Verbindungskanal (86) mit dem Druckraum (48) verbundenen Vorratsraum (82) zur Bevorratung von Hydraulikmedium, eine Ventileinheit (130), welche in einer Öffnungsstellung (150) die Verbindung zwischen dem Vorratsraum (82) und dem Druckraum (102) zulässt und in einer Schließstellung (135) diese Verbindung trennt, sowie eine Verbindungsöffnung (104) zur Weiterleitung von druckbeaufschlagtem Hydraulikmedium aus dem Druckraum (102) zu einem beispielsweise angeschlossenen hydraulischen Bremszylinder (32), wobei
in einer funktionsgemäßen Ausrichtung (262) der Gebereinheit (24) der Verbindungskanal (86) in einen bezogen auf eine Schwerkraftrichtung (266) höchstliegenden Endbereich (284) des Druckraums (102) einmündet, wobei der Kolben (90) und die Ventileinheit (130) durch eine Kopplungseinheit (147) gekoppelt sind, wobei der Kolben (90) und die Ventileinheit (130) durch eine kolbenstellungsabhängig wirksame Kopplungseinheit (147) so gekoppelt sind, dass die Kopplungseinheit (147) die Ventileinheit in der Öffnungsstellung hält, wenn der Kolben (90) in der Ausgangsstellung steht und in der Druckstellung des Kolbens (90) die Kopplungseinheit (147) die Ventileinheit (130) und den Kolben (90) entkoppelt und **dadurch gekennzeichnet, dass** der Gehäusekörper (42) einteilig ist.

2. Gebereinheit (24) nach Anspruch 1, **dadurch gekennzeichnet, dass** eine in dem Gehäusekörper (42) angeordnete Zylinderkammer (50) den Druckraum (102) umfasst, dass insbesondere die Zylinderkammer (50) sich längs einer Zylinderbohrungsachse (56) erstreckt und dass die Zylinderbohrungsachse (56) bei der funktionsgemäßen Ausrichtung (262) der Gebereinheit (24) im Wesentlichen parallel oder schräg zu der Schwerkraftrichtung (266) orientiert ist.

3. Gebereinheit (24) nach einem der voranstehenden Ansprüche, **dadurch gekennzeichnet, dass** die Ventileinheit (130) einen in dem Druckraum (102) angeordneten Ventilkörper (132) umfasst, der mit einem Ventilsitz (51) zusammenwirkt.

4. Gebereinheit (24) nach einem der voranstehenden Ansprüche, **dadurch gekennzeichnet, dass** der Ventilkörper (132) in Richtung des Ventilsitzes (51) kraftbeaufschlagt ist.

5. Gebereinheit (24) nach einem der voranstehenden Ansprüche, **dadurch gekennzeichnet, dass** der Ventilkörper (132) durch eine Druckfeder (142) beaufschlagt ist und dass insbesondere die Druckfeder (142) sich an dem Kolben (90) abstützt.

6. Gebereinheit (24) nach einem der voranstehenden Ansprüche, **dadurch gekennzeichnet, dass** die Verbindungsöffnung (104) in einem Zwischenbereich (63) des Druckraums (102) angeordnet ist, welcher von dem bei der funktionsgemäßen Ausrichtung (262) der Gebereinheit (24) bezogen auf die Schwerkraftrichtung (266) höchstliegenden Endbereich (284) des Druckraums (102) beabstandet ist.

7. Gebereinheit (24) nach einem der voranstehenden Ansprüche, **dadurch gekennzeichnet, dass** ein Teilabschnitt des Druckraums (102) zwischen der ersten Mündungsöffnung (78) des Verbindungskanals (86) in dem Druckraum (102) und der Verbindungsöffnung (104) angeordnet ist.

8. Gebereinheit (24) nach einem der voranstehenden Ansprüche, **dadurch gekennzeichnet, dass** bei der funktionsgemäßen Ausrichtung (262) der Gebereinheit (24) bezogen auf die Schwerkraftrichtung (266) unterhalb des Vorratsraums (82) ein Sammelbereich (226) vorgesehen ist und dass insbesondere der Verbindungskanal (86) in der funktionsgemäßen Ausrichtung (262) der Gebereinheit (24) bezogen auf die Schwerkraftrichtung (266) oberhalb des Sammelbereichs (226) in den Vorratsraum (82) einmündet.

9. Lenkerarmatur (410) umfassend ein Armaturengehäuse (432), **dadurch gekennzeichnet, dass** das Armaturengehäuse (432) einen Gehäusekörper (42) einer Gebereinheit (24) nach einem der voranstehenden Ansprüche ausbildet.

10. Lenkerarmatur (410) nach Anspruch 9, **dadurch gekennzeichnet, dass** die Lenkerarmatur (410) sich von einem Befestigungsbereich (433) in eine Erstreckungsrichtung (434) zu einer Betätigungsseite (44) erstreckt und dass bei einer funktionsgemäßen Ausrichtung (262) der in die Lenkerarmatur (410) integrierten Gebereinheit (24) die Erstreckungsrichtung (434) schräg zu der Schwerkraftrichtung (266) verläuft.

11. Fahrzeug (10), umfassend einen Rahmen (14) und mindestens zwei an dem Rahmen (14) drehbar gelagerte Räder (16, 18), **dadurch gekennzeichnet, dass** an dem in Fahrbereitschaft stehenden Fahrzeug (10) eine Gebereinheit (24) nach einem der voranstehenden Ansprüche in der funktionsgemäßen Ausrichtung (262) angeordnet ist und dass insbesondere die an das Fahrzeug (10) angeordnete Gebereinheit (24) in eine Lenkerarmatur (410), insbesondere in eine Lenkerarmatur (410) nach Anspruch 9 oder 10, integriert ist.

12. Fahrzeug (10) nach Anspruch 11, **dadurch gekennzeichnet, dass** die funktionsgemäße Ausrichtung (262) der an das in Fahrbereitschaft auf einer horizontalen Standfläche (12) stehende Fahrzeug (10) angeordneten Gebereinheit (24) im Wesentlichen parallel oder schräg zu der Senkrechten (13) auf der horizontalen Standfläche (12) orientiert ist.

13. Fahrzeug (10) nach Anspruch 11 oder 12, **dadurch gekennzeichnet, dass** die funktionsgemäße Ausrichtung (262) der an das in Fahrbereitschaft auf einer horizontalen Standfläche (12) stehende Fahrzeug (10) angeordneten Gebereinheit (24) im Wesentlichen parallel oder schräg zu einer Längsmittelebene (11) des Fahrzeugs (10) liegt und im Wesentlichen senkrecht oder schräg zu einer durch die Mittelpunkte der mindestens zwei Räder (16, 18) definierten, geometrischen Verbindungslinie (19) steht.

## Claims

1. Transmitter unit (24), especially for a hydraulic brake system (20) or for a hydraulic clutch system, comprising a housing body (42), a piston (90) which is arranged in the housing body (42) able to move between a starting disposition (116) and a pressure disposition (103), a pressure chamber (102) bounded by the housing body (42) and the piston (90), a reservoir (82) for the supply of hydraulic fluid connected by a connection channel (86) to the pressure chamber (48), a valve unit (130), which in an open position (150) allows the connection between the reservoir (82) and the pressure chamber (102) and in a closed position (135) breaks this connection, as well as a connection opening (104) for the routing of pressurized hydraulic fluid from the pressure chamber (102) for example to a connected hydraulic brake cylinder (32), wherein
in a functional orientation (262) of the transmitter unit (24), the connection channel (86) opens into a highest end region (284) of the pressure chamber (102) in regard to a direction of gravity (266), wherein the piston (90) and the valve unit (130) are coupled by a coupling unit (147), wherein the piston (90) and the valve unit (130) are coupled by a coupling unit (147) acting in dependence on the piston position, in a manner such that the coupling unit (147) holds the valve unit in the open position when the piston (90) is in the starting disposition and in the pressure disposition (103) of the piston (90) the coupling unit (147) decouples the valve unit (130) and the piston (90) and **characterized in that** the housing body (42) is a single piece.

2. Transmitter unit (24) according to Claim 1, **characterized in that** a cylinder chamber (50) disposed in the housing body (42) incorporates the pressure chamber (102), **in that** in particular the cylinder chamber (50) extends along a cylinder bore axis (56) and **in that** the cylinder bore axis (56) in the functional orientation (262) of the transmitter unit (24) is oriented substantially parallel or obliquely to the direction of gravity (266).

3. Transmitter unit (24) according to one of the preceding claims, **characterized in that** the valve unit (130) comprises a valve body (132) arranged in the pressure chamber (102), which co-operates with the valve seat (51).

4. Transmitter unit (24) according to one of the preceding claims, **characterized in that** the valve body (132) is subjected to force in the direction of the valve seat (51).

5. Transmitter unit (24) according to one of the preceding claims, **characterized in that** the valve body (132) is acted on by a compression spring (142), and **in that** in particular the compression spring (142) abuts against the piston (90).

6. Transmitter unit (24) according to one of the preceding claims, **characterized in that** the connection opening (104) is arranged in an intermediate region (63) of the pressure chamber (102), which is at a spacing from the in the functional orientation (262) of the transmitter unit (24) relative to the direction of gravity (266) highest end region (284) of the pressure chamber (102).

7. Transmitter unit (24) according to one of the preceding claims, **characterized in that** a part of the pressure chamber (102) is arranged between the first mouth opening (78) of the connection channel (86) in the pressure chamber (102) and the connection opening (104).

8. Transmitter unit (24) according to one of the preceding claims, **characterized in that** a collecting region (226) is provided beneath the reservoir (82) relative to the direction of gravity (266) in the functional orientation (262) of the transmitter unit (24), and **in that** in particular the connection channel (86) opens into the reservoir (82) above the collecting region (226) relative to the direction of gravity (266) in the functional orientation (262) of the transmitter unit (24).

9. Handlebar fitting (410) comprising a fitting housing (432), **characterized in that** the fitting housing (432) forms a housing body (42) of a transmitter unit (24) according to one of the preceding claims.

10. Handlebar fitting (410) according to Claim 9, **characterized in that** the handlebar fitting (410) extends from a fastening region (433) in a direction of extent (434) to an actuation side (44) and **in that** the direction of extent (434) runs obliquely to the direction of gravity (266) in a functional orientation (262) of the transmitter unit (24) integrated in the handlebar fitting (410).

11. Vehicle (10), comprising a frame (14) and at least two wheels (16, 18) rotatably mounted on the frame (14), **characterized in that** a transmitter unit (24) according to one of the preceding claims is arranged in the functional orientation (262) on the vehicle (10) when ready to drive, and **in that** in particular the transmitter unit (24) arranged on the vehicle (10) is integrated in a handlebar fitting (410), especially in a handlebar fitting (410) according to Claim 9 or 10.

12. Vehicle (10) according to Claim 11, **characterized in that** the functional orientation (262) of the transmitter unit (24) arranged on the vehicle (10) when on a horizontal standing surface (12) being ready to drive is oriented substantially parallel or obliquely to the perpendicular (13) to the horizontal standing surface (12).

13. Vehicle (10) according to Claim 11 or 12, **characterized in that** the functional orientation (262) of the transmitter unit (24) arranged on the vehicle (10) when on a horizontal standing surface (12) being ready to drive lies substantially parallel or obliquely to a longitudinal median plane (11) of the vehicle (10) and is substantially perpendicular or oblique to a geometrical line of connection (19) defined by the midpoints of the at least two wheels (16, 18).

## Revendications

1. Unité de transmission (24), en particulier pour un système de freinage (20) hydraulique ou pour un système de couplage hydraulique, comprenant un corps de boîtier (42), un piston (90), qui est disposé de manière mobile dans le corps de boîtier (42) entre une position de départ (116) et une position de pression (103), une chambre de pression (102) délimitée par le corps de boîtier (42) et le piston (90), une chambre de stockage (82) reliée par l'intermédiaire d'un canal de liaison (86) à la chambre de pression (48), servant au stockage de milieu hydraulique, une unité de soupape (130), laquelle autorise dans une position d'ouverture (150) la liaison entre la chambre de stockage (82) et la chambre de pression (102) et coupe cette liaison dans une position de fermeture (135), ainsi qu'une ouverture de liaison (104) servant au transfert de milieu hydraulique soumis à l'action d'une pression hors de la chambre de pression (102) vers un cylindre de freinage (32) hydraulique raccordé par exemple, dans lequel
le canal de liaison (86) débouche, dans une orientation fonctionnelle (262) de l'unité de transmission (24), dans une zone d'extrémité (284), située le plus haut par rapport à un sens de gravité (266), de la chambre de pression (102),
dans laquelle
le piston (90) et l'unité de soupape (130) sont couplés par une unité de couplage (147), que le piston (90) et l'unité de soupape (130) sont couplés de telle sorte par une unité de couplage (147) active en fonction de la position de piston que l'unité de couplage (147) maintient l'unité de soupape dans la position d'ouverture quand le piston (90) se trouve dans la position de départ et l'unité de couplage (147) découple dans la position de pression du piston (90) l'unité de soupape (130) et le piston (90), et **caractérisée en ce que** le corps de boîtier (42) est en une seule pièce.

2. Unité de transmission (24) selon la revendication 1, **caractérisée en ce qu'**une chambre de cylindre (50) disposée dans le corps de boîtier (42) comprend la chambre de pression (102), qu'en particulier la chambre de cylindre (50) s'étend le long d'un axe d'alésage de cylindre (56), et que l'axe d'alésage de cylindre (56) est orienté sensiblement de manière parallèle ou de manière oblique par rapport au sens de gravité (266) lors de l'orientation fonctionnelle (262) de l'unité de transmission (24).

3. Unité de transmission (24) selon l'une quelconque des revendications précédentes, **caractérisée en ce que** l'unité de soupape (130) comprend un corps de soupape (132) disposé dans la chambre de pression (102), qui coopère avec un siège de soupape (51).

4. Unité de transmission (24) selon l'une quelconque des revendications précédentes, **caractérisée en ce que** le corps de soupape (132) est soumis à l'action d'une force en direction du siège de soupape (51).

5. Unité de transmission (24) selon l'une quelconque des revendications précédentes, **caractérisée en ce que** le corps de soupape (132) est soumis à l'action d'un ressort de pression (142), et qu'en particulier le ressort de pression (142) prend appui au niveau du piston (90) .

6. Unité de transmission (24) selon l'une quelconque des revendications précédentes, **caractérisée en ce que** l'ouverture de liaison (104) est disposée dans une zone intermédiaire (63) de la chambre de pression (102), laquelle est tenue à distance de la zone d'extrémité (284), située le plus haut lors de l'orientation fonctionnelle (262) de l'unité de transmission (24) par rapport au sens de gravité (266), de la chambre de pression (102).

7. Unité de transmission (24) selon l'une quelconque des revendications précédentes, **caractérisée en ce qu'**une section partielle de la chambre de pression (102) est disposée entre la première ouverture d'embouchure (78) du canal de liaison (86) dans la chambre de pression (102) et l'ouverture de liaison (104).

8. Unité de transmission (24) selon l'une quelconque des revendications précédentes, **caractérisée en ce qu'**une zone de collecte (226) est prévue lors de l'orientation fonctionnelle (262) de l'unité de transmission (24) par rapport au sens de gravité (266) en-dessous de la chambre de stockage (82), et qu'en particulier le canal de liaison (86) débouche dans l'orientation fonctionnelle (262) de l'unité de transmission (24) par rapport au sens de gravité (266) au-dessus de la zone de collecte (226) dans la chambre de stockage (82).

9. Armature de guidon (410) comprenant un boîtier d'armature (432), **caractérisée en ce que** le boîtier d'armature (432) réalise un corps de boîtier (42) d'une unité de transmission (24) selon l'une quelconque des revendications précédentes.

10. Armature de guidon (410) selon la revendication 9, **caractérisée en ce que** l'armature de guidon (410) s'étend depuis une zone de fixation (433) dans une direction d'extension (434) vers un côté d'actionnement (44), et que lors d'une orientation fonctionnelle (262) de l'unité de transmission (24) intégrée dans l'armature de guidon (410), la direction d'extension (434) s'étend de manière oblique par rapport au sens de gravité (266).

11. Véhicule (10), comprenant un cadre (14) et au moins deux roues (16, 18) montées de manière à pouvoir tourner au niveau du cadre (14), **caractérisé en ce qu'**une unité de transmission (24) selon l'une quelconque des revendications précédentes est disposée dans l'orientation fonctionnelle (262) au niveau du véhicule (10) prêt à rouler, et qu'en particulier l'unité de transmission (24) disposée au niveau du véhicule (10) est intégrée dans une armature de guidon (410), en particulier dans une armature de guidon (410) selon la revendication 9 ou 10.

12. Véhicule (10) selon la revendication 11, **caractérisé en ce que** l'orientation fonctionnelle (262) de l'unité de transmission (24) disposée au niveau du véhicule (10) prêt à rouler sur une surface d'appui horizontale (12) est orientée de manière sensiblement parallèle ou oblique par rapport à la verticale (13) sur la surface d'appui horizontale (12).

13. Véhicule (10) selon la revendication 11 ou 12, **caractérisé en ce que** l'orientation fonctionnelle (262) de l'unité de transmission (24) disposée au niveau du véhicule (10) prêt à rouler sur une surface d'appui horizontale (12) est sensiblement parallèle ou oblique par rapport à un plan médian longitudinal (11) du véhicule (10) et est sensiblement perpendiculaire ou oblique par rapport à une ligne de liaison (19) géométrique définie par les points centraux des au moins deux roues (16, 18).
